(19) **Europäisches Patentamt / European Patent Office / Office européen des brevets**

(11) **EP 3 486 980 B1**

(12) **EUROPEAN PATENT SPECIFICATION**

(45) Date of publication and mention of the grant of the patent:
**13.09.2023 Bulletin 2023/37**

(21) Application number: **17827593.9**

(22) Date of filing: **10.07.2017**

(51) International Patent Classification (IPC):
**H01M 4/505** (2010.01)    **C01G 53/00** (2006.01)
**H01M 4/525** (2010.01)

(52) Cooperative Patent Classification (CPC):
**C01G 53/50; H01M 4/505; H01M 4/525;**
C01P 2002/30; C01P 2002/52; C01P 2002/76;
C01P 2002/77; C01P 2006/12; Y02E 60/10

(86) International application number:
**PCT/JP2017/025174**

(87) International publication number:
**WO 2018/012466 (18.01.2018 Gazette 2018/03)**

(54) **POSITIVE ACTIVE MATERIAL FOR LITHIUM SECONDARY BATTERY, METHOD FOR PRODUCING SAME, AND LITHIUM SECONDARY BATTERY**

POSITIVES AKTIVMATERIAL FÜR LITHIUMSEKUNDÄRBATTERIE, VERFAHREN ZUR HERSTELLUNG DAVON UND LITHIUMSEKUNDÄRBATTERIE

MATIÈRE ACTIVE POSITIVE DESTINÉE À UNE BATTERIE SECONDAIRE AU LITHIUM, SON PROCÉDÉ DE PRODUCTION ET BATTERIE SECONDAIRE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2016 JP 2016138913**
**02.12.2016 JP 2016235200**

(43) Date of publication of application:
**22.05.2019 Bulletin 2019/21**

(73) Proprietors:
• **GS Yuasa International Ltd.**
**Kyoto-shi, Kyoto 601-8520 (JP)**
• **Basf Toda Battery Materials LLC**
**Minato-ku, Tokyo 108-0075 (JP)**

(72) Inventors:
• **INOUE Katsuya**
**Kyoto-shi**
**Kyoto 601-8520 (JP)**
• **INOUE Taisei**
**Sanyoonoda-shi**
**Yamaguchi 756-0847 (JP)**
• **NISHIKAWA Daisuke**
**Sanyoonoda-shi**
**Yamaguchi 756-0847 (JP)**

• **YAMAMOTO Manabu**
**Sanyoonoda-shi**
**Yamaguchi 756-0847 (JP)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**WO-A1-2011/068172     JP-A- 2013 175 401**
**JP-A- 2014 130 782     JP-A- 2015 005 350**
**US-A1- 2013 323 142**

• **GAO MIN ET AL: "Synthesis and electrochemical performance of long lifespan Li-rich Li1+x(Ni0.37Mn0.63)1-xO2cathode materials for lithium-ion batteries", ELECTROCHIMICA ACTA, ELSEVIER, AMSTERDAM, NL, vol. 95, 14 February 2013 (2013-02-14), pages 87-94, XP028525489, ISSN: 0013-4686, DOI: 10.1016/J.ELECTACTA.2013.01.159**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 486 980 B1

- **LIU JIANHONG ET AL: "Morphology and particle growth of a two-phase Ni/Mn precursor for high-capacity Li-rich cathode materials", JOURNAL OF APPLIED ELECTROCHEMISTRY, SPRINGER, DORDRECHT, NL, vol. 44, no. 2, 13 October 2013 (2013-10-13), pages 225-232, XP035305849, ISSN: 0021-891X, DOI: 10.1007/S10800-013-0633-3 [retrieved on 2013-10-13]**

**Description**

TECHNICAL FIELD

The present invention relates to a positive active material for a lithium secondary battery, a production method thereof, a positive electrode containing the positive active material, a lithium secondary battery including the positive electrode, and an energy storage apparatus.

BACKGROUND ART

Conventionally, in a lithium secondary battery which is a nonaqueous electrolyte secondary battery, a "LiMeO$_2$ type" active material (Me is a transition metal) having an $\alpha$-NaFeO$_2$ type crystal structure had been studied as a lithium transition metal composite oxide used for a positive active material, and LiCoO$_2$ had been widely put to practical use. The lithium secondary battery using LiCoO$_2$ as the positive active material had a discharge capacity of about 120 to 130 mAh/g.

Various "LiMeO$_2$ type" active materials excellent also in charge-discharge cycle performance are proposed and partially put to practical use. For example, L$_1$Ni$_{1/2}$Mn$_{1/2}$O$_2$ and LiCo$_{1/3}$Ni$_{1/3}$Mn$_{1/3}$O$_2$ have a discharge capacity of 150 to 180 mAh/g.

As the Me, it has been desired to use Mn that is abundant as an earth resource. However, the "LiMeO$_2$ type" active material in which a molar ratio Mn/Me of Mn to Me exceeds 0.5 had a problem that it underwent a structural change from the $\alpha$-NaFeO$_2$ type to the spinel type with charging, and could not maintain the crystal structure, resulting in very poor in charge-discharge cycle performance.

Therefore, in recent years, as the "LiMeO$_2$ type" active material as described above, a so-called "lithium excess type" active material in which the molar ratio Li/Me of lithium to the transition metal (Me) exceeds 1, the molar ratio Mn/Me of manganese (Mn) exceeds 0.5, and is capable of maintaining the $\alpha$-NaFeO$_2$ structure even after charged, has been proposed. This active material can be expressed as Li$_a$MeO$_{1+a}$ (a > 1).

Patent Document 1 describes "a positive active material which is a composite oxide represented by "Li$_a$Ni$_x$Co$_y$Mn$_z$O$_{1+a}$ (wherein x + y + z = 1) and satisfying the following conditions (1) to (3), having a specific surface area of 4.5 m$^2$/g or more,

(1)

$$0.03 \leq y/x \leq 0.25,$$

(2) The ratio a of Li to the total of Ni, Co and Mn is 2z + y - 0.1 $\leq$ a $\leq$ 2z + y + 0.1, and

(3) The composite oxide contains a lithium excess phase and the ratio b of the lithium excess phase represented by b = 3(z - x)/(x + 2y + 3z) is 0.18 $\leq$ b <0.36." (Claim 1).

In addition, Patent Document 1 describes that "as shown in Table 2, Examples 3, 4, and 9 to 11 that satisfy the conditions (1) to (3) and have a specific surface area of 4.5 m$^2$/g or more had sufficient rate characteristics and high charge-discharge efficiency, as compared with Examples 1, 2, 5 to 8, and 12 to 15 that did not satisfy any of the conditions." (paragraph [0103]).

Moreover, in Examples 3, 4 and 9 to 11, the composite oxide in which y is 0.03, 0.02, 0.03, 0.06 or 0.09, Li/X(a) is 1.140, 1.203, 1.125, 1.125 or 1.125, and x is 0.41, 0.38, 0.42, 0.40 or 0.38 is shown, respectively (see Tables 1 and 2).

Also, as Examples 2 to 15, it is described that "coprecipitated compounds each having a composition ratio and a specific surface area shown in Table 1 were similarly obtained as in Example 1 except that the mixing ratio of nickel(II) sulfate hexahydrate, cobalt(II) sulfate heptahydrate and manganese(II) sulfate pentahydrate was adjusted, and the coprecipitation time was changed as shown in Table 1. Further, a positive active material was similarly obtained as in Example 1 except that Li/X was changed as shown in Table 1 by using the obtained coprecipitated compound. The results of measuring specific surface area, particle size (D50) and tap density of the obtained positive active material are shown in Table 1." (paragraph [0099]). In Table 1 (paragraph [0101]) and Table 2 (paragraph [0102]), it is described that, as to Example 5, Li/X is 1.290, x is 0.34, y is 0.02, and z is 0.64, and the specific surface area is 11.6 m$^2$/g (X is described as "transition metal element (X) composed of Ni, Co and Mn" in paragraph [0098]).

Patent Document 2 describes "a positive active material which is a composite oxide represented by "Li$_a$Ni$_x$Co$_y$Mn$_z$O$_{1+a}$ (wherein x + y + z = 1) and satisfying the following conditions (1) to (3), having a specific surface area of 4.5 m$^2$/g or more,

(1) The ratio b of the lithium excess phase in the composite oxide represented by $b = 3(z - x)/(x + 2y + 3z)$ is $0.36 \leq b \leq 0.45$,
(2) $0.03 \leq y/x \leq 0.25$, and
(3) The ratio a of Li to the total of Ni, Co and Mn is $2z + y - 0.1 \leq a \leq 2z + y + 0.1$."(Claim 1).

In addition, Patent Document 2 describes "as shown in Table 2, Examples 5, 9, and 10 that satisfy the conditions (1) to (3) and have a specific surface area of 4.5 $m^2$/g or more, 4.5 V initial capacity was high and the rate characteristics were excellent, as compared with Examples 1 to 4, 6 to 8, and 11 to 14 that did not satisfy any of the conditions. Also, in Examples 5, 9, and 10, sufficient charge-discharge efficiency was also obtained." (paragraph [0100]).

Further, in paragraph [0096], [0098] Table 1, and [0099] Table 2, as Example 5, the positive active material which is the composite oxide having the same composition and the same specific surface area as in Example 5 described in Patent Document 1 is described.

Patent Document 3 describes "a positive electrode active composition for a lithium ion battery comprising a layered lithium metal oxide approximately represented by the formula $xLi_2MnO_3 \cdot (1 - x)LiNi_{u+\Delta}Mn_{u-\Delta}Co_wA_yO_2$, x is at least about 0.03 and no more than about 0.47, the absolute value of $\Delta$ generally is no more than about 0.3, $2u + w + y$ is approximately equal to 1, w is in the range from 0 to 1, u is in the range from 0 to 0.5 and y is no more than about 0.1, with the proviso that both $(u + \Delta)$ and w are not 0, wherein an optional fluorine dopant can replace no more than about 10 mole percent of the oxygen" (claim 1).

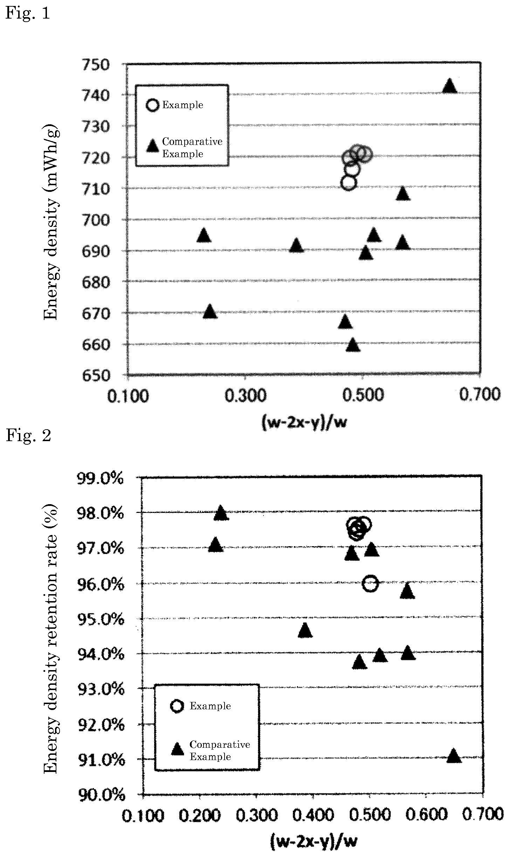

Also, Patent Document 3 describes that "as discussed in the above sections, the overall formula for these compositions can be written as $xLi_2MnO_3 \cdot (1 - x)LiNi_uMn_vCo_wO_2$ (formula I) or $Li_{1+b}Ni_\alpha Co_\gamma Mn_\beta O_2$ (formula II). Two sets of compositions were formed. For the first set, variations of compositions having $u = v$ were synthesized. As seen in Table 3, a total of 34 cathode compositions ranging in X from 0.1 to 0.5 and in Mn% from 35% to 70% were synthesized. The relationship between the Ni, Co, and Mn present in the compositions are further illustrated in Fig. 2. For the second set of compositions, u is not equal to v and again x = 0.1, 0.2, 0.3, 0.4, or 0.5. Table 4 shows five different synthesized cathode compositions and their corresponding Mn%." (paragraph [0085]). Moreover, from Fig. 2, it can be read that when Mn is 0.35 to 0.70, Co is 0.125 to 0.625.

Furthermore, it is described that, "Coin batteries formed with cathode materials having X = 0.2, X = 0.3 and X = 0.5 were cycled between 4.5 V and 2 volts for 225, 350 and 400 cycles, respectively. The first two cycles were performed at a rate of C/10, and subsequent cycles were performed at a rate of C/3. The specific discharge capacities are plotted in Fig. 27. While the batteries with the X = 0.5 compositions has significantly greater specific capacity initially, these batteries also exhibited faster fade of capacity with cycles. At 225 cycles, the cycle efficiencies with respect to specific capacity for the batteries relative to the initial cycle performance were about 90% for X = 0.2, 87% for X = 0.3 and 81% for X = 0.5.

Similarly, the average voltages were measured for these batteries with cycle. The average voltage as a function of cycle number is plotted in Fig. 28 for the three coin batteries. The batteries formed with the X = 0.5 cathode composition exhibited a significantly lower average voltage at all cycles relative to the other two batteries, and the average voltage dropped more quickly with cycle for the battery with the X = 0.5 cathode material. A lower average voltage generally results in a corresponding decrease in energy and power available from the battery. The battery with the X = 0.2 composition exhibited just a slightly greater average voltage at all of the cycles relative to the average voltage exhibited by the battery with X = 0.3. " (paragraph [0125]).

Further positive active materials are described in Gao Min et al., Electrochimica Acta, 95, 2013, pp. 87-94, and in JP 2014 130782 A.

PRIOR ART DOCUMENTS

PATENT DOCUMENTS

Patent Document 1: JP-A-2014-116162
Patent Document 2: JP-A-2014-089826
Patent Document 3: JP-A-2013-503450

SUMMARY OF THE INVENTION

PROBLEMS TO BE SOLVED BY THE INVENTION

Lithium secondary batteries using the above-mentioned "lithium excess type" active material as a positive electrode have been studied for application to automotive fields such as electric vehicles, hybrid vehicles and plug-in hybrid vehicles. Such a lithium secondary battery has been required to suppress a decrease in energy density accompanying repetition of charge-discharge cycles as well as high energy density. However, it was difficult to make them compatible.

It is an object of the present invention to provide a "lithium excess type" positive active material having high energy density and high energy density retention rate with charge-discharge cycles.

MEANS FOR SOLVING THE PROBLEMS

One aspect of the first aspect of the present invention adopts the following means in order to solve the above problem.

A positive active material for a lithium secondary battery containing a lithium transition metal composite oxide, wherein the lithium transition metal composite oxide has an $\alpha$-NaFeO$_2$ type crystal structure, and is represented by formula $Li_wNi_xCo_yMn_zO_{1+w}$ (w > 1, x + y + z = 1),

$$0.315 < x < 0.35,$$

$$0 \le y < 0.02,$$

$$0.655 < z < 0.675,$$

and

$$0.475 < (w \text{ - } 2x \text{ - } y)/w < 0.510.$$

Described in a second aspect but not according to the invention are the following means in order to solve the above problem.

A positive active material for a lithium secondary battery containing a lithium transition metal composite oxide, wherein the lithium transition metal composite oxide has an $\alpha$-NaFeO$_2$ type crystal structure, and is represented by formula $Li_aNi_xCo_yMn_zO_{1+a}$ (1 < a, x < z, x + y + z = 1), $-0.06 \le \omega \le 0.06$,

$$\omega = 2 \cdot (a \text{ - } 2x \text{ - } y)/(z \text{ - } x),$$

and

$$0 \le y \le 0.105.$$

In the above description, lithium transition metal composite oxides satisfying a = 1.290, x = 0.34, y = 0.02, and z = 0.64 are described in Patent Documents 1 and 2.

Another aspect of the first aspect of the present invention adopts the following means.

A method for producing a positive active material for a lithium secondary battery containing a lithium transition metal composite oxide, including supplying an aqueous solution of a transition metal compound containing Ni and Mn, or Ni, Co and Mn whose molar ratios x, y and z of Ni, Co and Mn are adjusted to be 0.315 < x < 0.35, $0 \le y < 0.02$, and 0.655 < z < 0.675 (x + y + z = 1), and an alkaline aqueous solution to a reaction tank, producing a precursor containing a transition metal, and mixing the precursor and the lithium compound so that, when the molar ratio of Li in the lithium transition metal composite oxide is w, the value of (w - 2x - y)/w is in the range of 0.475 < (w - 2x - y)/w < 0.510 (w > 1), and firing the mixture to produce a lithium transition metal composite oxide having an $\alpha$-NaFeO$_2$ type crystal structure.

Described in a second aspect but not according to the invention are the following means.

A method for producing a positive active material for a lithium secondary battery containing a lithium transition metal composite oxide, including supplying an aqueous solution of a transition metal compound containing Ni and Mn, or Ni, Co and Mn, and an alkaline aqueous solution to a reaction tank, producing a precursor containing a transition metal, and mixing the precursor and the lithium compound so that, when the molar ratio of Li to the transition metal (Ni, Co and Mn) is a, 1 < a, and molar ratios x, y and z of Ni, Co and Mn are in the ranges of $-0.06 \leq \omega \leq 0.06$, $\omega = 2 - (a - 2x - y)/(z - x)$, $0 \leq y \leq 0.105$ ($x < z$, $x + y + z = 1$) and firing the mixture to produce a lithium transition metal composite oxide having an $\alpha$-NaFeO$_2$ type crystal structure.

ADVANTAGES OF THE INVENTION

According to the present invention, it is possible to provide a "lithium excess type" positive active material having high energy density and high energy density retention rate with charge-discharge cycles.

BRIEF DESCRIPTION OF THE DRAWINGS

Fig. 1 is a graph showing the relationship between the composition and the energy density of a positive active material according to an embodiment of the first aspect of the present invention.
Fig. 2 is a graph showing the relationship between the composition and the energy density retention rate of a positive active material according to an embodiment of the first aspect of the present invention.
Fig. 3 is a graph showing the relationship between the energy density and the energy density retention rate of a positive active material according to an embodiment of the first aspect of the present invention.
Fig. 4 is a graph showing the relationship between the composition and the lattice constant of a positive active material according to an embodiment of the first aspect of the present invention.
Fig. 5 is a graph showing the relationship between the composition and the energy density of a positive active material according to Example 2.
Fig. 6 is a graph showing the relationship between the composition and the energy density retention rate of a positive active material according to Example 2.
Fig. 7 is a graph showing the relationship between the energy density and the energy density retention rate of a positive active material according to Example 2.
Fig. 8 is a graph showing the relationship between the Co composition and the energy density of a positive active material according to Example 2.
Fig. 9 is a graph showing the relationship between the Co composition and the energy density retention rate of a positive active material according to Example 2.
Fig. 10 is a graph showing the relationship between the BET specific surface area and the energy density retention rate of a positive active material according to Example 2.
Fig. 11 is an external perspective view showing a lithium secondary battery according to an embodiment of the present invention.
Fig. 12 is a conceptual diagram showing an energy storage apparatus in which a plurality of lithium secondary batteries according to an embodiment of the present invention is assembled.

MODE FOR CARRYING OUT THE INVENTION

(Composition and Crystallinity of Positive Active Material)

The positive active material according to the embodiments of the first aspect of the invention and the second aspect not according to the present invention (hereinafter respectively referred to as "the first embodiment" and "the second embodiment", and collectively referred to as "the present embodiment") is a lithium transition metal composite oxide that has an $\alpha$-NaFeO$_2$ type crystal structure and is represented by formula Li$_a$Ni$_x$Co$_y$Mn$_z$O$_{1+a}$ (1 < a, x < z, x + y + z = 1).

The positive active material according to the present embodiment has a small amount of metal M (one of Mg, Sr, Ba, Cd, Zn, Ga, B, Zr, Ti, Ca, Ce. Y, Nb, Cr, Fe, and V, or a combination of two or more thereof) to such an extent that its characteristics are not markedly impaired.

The lithium transition metal composite oxide can be obtained, for example, as a powder synthesized by firing a coprecipitated precursor of a transition metal element and a lithium compound. In an X-ray diffraction pattern of the powder after synthesis (before charging/discharging) using a CuK$\alpha$ tube, in addition to a peak derived from a crystal system attributed to a space group R3-m, a superlattice peak (a peak found in the Li$_2$MnO$_3$ type monoclinic crystal) derived from a crystal system attributed to a space group C2/m, C2/c or P3$_1$12 is confirmed at $2\theta = 20.8 \pm 1°$. However, when charging is performed beyond the plateau around 4.5 V (vs. Li/Li$^+$) observed at the time of charging even once, the symmetry of the crystal changes with the desorption of Li in the crystal, whereby the superlattice peak disappears and the lithium transition metal composite oxide is being attributed to the space group R3-m. Incidentally, the space group C2/m, C2/c or P3$_1$12 is a crystal structure model obtained by subdividing the atomic positions of the 3a, 3b and 6c sites in the space group R3-m, and when an orderliness is recognized in the atomic arrangement in R3-m, the P3$_1$12 model is adopted. The diffraction peak at $2\theta = 18.6° \pm 1°$ on the X-ray diffraction diagram is indexed to the (003) plane in the mirror index hkl for space groups P3$_1$12 and R3-m.

Properly speaking, "R3-m" should be written with a bar "-" added above "3" of "R3m".

In the first aspect of the present invention, the present inventors have found that the composition ratio of Ni, Mn and Co is set within a specific range, and the ratio of $Li_2MnO_3$ when assuming that the "Li excess type" active material is a solid solution of $Li_2MnO_3$ and $LiMeO_2$ is set within a specific range, whereby it is possible to provide a "lithium excess type" positive active material having high energy density and high energy density retention rate with charge-discharge cycles. It is presumed that the movement of $Li^+$ present in a 2b site in $Li_2MnO_3$ was facilitated and the reaction field of the entering and exiting of $Li^+$ in the active material had proper size, whereby the effect of the present invention was exhibited.

In the first aspect of the present invention, the technical significance of (w - 2x - y)/w is as follows.

It is assumed that the "Li excess type" active material is a solid solution of $Li_2MnO_3$ (hereinafter written as "$Li_a(Li_{1/3}Mn_{2/3})O_{2+\beta}$") and $LiMeO_2$. Specifically, the "Li excess type" active material represented by $Li_wNi_xCo_yMn_zO_{1+w}$ (x + y + z = 1) is defined as $A\cdot Li_\alpha(Li_{1/3}Mn_{2/3})O_{2+\beta}$ - $B\cdot LiNi_{x'}Co_{y'}Mn_{x'}O_2$. Here, it is assumed that the oxidation number of Ni present in $LiMeO_2$ is always bivalent and that $Ni_{2+}$ and $Mn_{4+}$ are always present in equimolar amounts. Then, relational expressions of x' + y' + x' = 1, B·x' = x, B·y' = y are derived. At this time, the ratio of the amount of Li contained in $LiNi_{x'}Co_yMn_{x'}O_2$ in the above formula among the amount of Li contained in the entire "Li excess type" active material represented by $Li_wNi_xCo_yMn_zO_{1+w}$ is expressed as

$$(B\ x' + B\ y' + Bx')/w = (2x + y)/w,$$

and the ratio of the amount of Li contained in $Li_\alpha(Li_{1/3}Mn_{2/3})O_{2+\beta}$ is expressed as

$$1 - (2x + y)/w = (w - 2x + y)/w.$$

In the lithium transition metal composite oxide according to the first embodiment, the value of (w - 2x - y)/w representing the ratio of $Li_\alpha(Li_{1/3}Mn_{2/3})O_{2+\beta}$ in the above formula is set within the range of 0.475 < (w - 2x - y)/w < 0.510, and x, y, and z in the above formula $Li_wNi_xCo_yMn_zO_{1+w}$ (w > 1, x + y + z = 1) are set within the ranges of 0.315 < x < 0.35, $0 \leq y < 0.02$, and 0.655 < z < 0.675, respectively. By setting the lithium transition metal composite oxide within the composition range as described above, a positive active material having high energy density and high energy density retention rate with charge-discharge cycles is obtained.

Also, w is preferably set within the range of $1.30 \leq w \leq 1.35$.

The lithium transition metal oxide according to the first embodiment preferably has a lattice constant a of 2.870 or more. The lattice constant a is determined by X-ray diffraction measurement according to the following procedure. A sample to be subjected to X-ray diffraction measurement is subjected to measurement as it is as long as it is an active material powder before preparing an electrode. In the case of collecting a sample from an electrode taken out by disassembling the battery, before disassembling the battery, the battery is discharged by the following procedure. First, constant current charging is performed to a battery voltage at which the potential of the positive electrode becomes 4.3 V (vs. Li/Li$^+$) with a current of 0.1 C, and constant voltage charging is performed at the same battery voltage until the current value decreases to 0.01 C to obtain the charge end state. After pausing for 30 minutes, constant current discharging is performed until reaching a battery voltage at which the potential of the positive electrode becomes 2.0 V (vs. Li/Li$^+$) with a current of 0.1 C to obtain the discharge end state. In the case of a battery using a metallic lithium electrode as a negative electrode, the electrode may be taken out by disassembling the battery after setting the battery in the discharge end state or the charge end state, whereas in the case of a battery not using a metallic lithium electrode as a negative electrode, in order to accurately control the positive electrode potential, after disassembling the battery and taking out the electrode, a battery with the metallic lithium electrode as a counter electrode is assembled and then adjusted to the discharge end state, according to the above procedure.

The operation from disassembly of the battery to the measurement is performed in an argon atmosphere having a dew point of -60°C or less. The positive electrode plate taken out is thoroughly washed with dimethyl carbonate.

After drying for twenty-four hours at room temperature, a mixture is taken out from the electrode and the aggregated powder is loosen using an agate mortar.

The radiation source of the X-ray diffractometer is CuK$\alpha$, and the acceleration voltage and the current are 45 kV and 200 mA, respectively. A sampling width is 0.01 deg, a scan width is 15 deg to 70 deg, the scan speed is 0.9 sec, a divergence slit width is 0.65 deg, a light receiving slit width is 0.2 mm, and a scattering slit is 0.65 deg. With respect to the obtained X-ray diffraction data, peak positions were determined using "PDXL", attached software of the X-ray diffractometer, without removing a peak derived from K$\alpha$2. Of the obtained peak positions, the lattice constant a is obtained using the peaks represented by (012), (110) and (113) in the space group R3-m.

In the second aspect not according to the present invention, the present inventors have found that the amount of Co in the lithium transition metal composite oxide $Li_aNi_xCo_yMn_zO_{1+a}$ ($1 < a$, $x < z$, $x + y + z = 1$) is reduced as much as possible to set Ni, Mn and Li to an appropriate ratio, whereby it is possible to provide a "lithium excess type" positive active material having high energy density and high energy density retention rate with charge-discharge cycles. More specifically, y in the above equation is set to 0.105 or less, and "$2 - (a - 2x - y)/(z - x)$" is set within the range of $\pm$ 0.06.

The technical significance of "$2 - (a - 2x - y)/(z - x)$" is as follows.

Assuming that the "Li excess type" active material is a solid solution of $LiMeO_2$ and $Li_2MnO_3$ (hereinafter written as "$Li(Li_{1/3}Mn_{2/3})O_2$"), the "Li excess type" active material expressed as

$$Li_aNi_xCo_yMn_zO_{1+a} \ (x + y + z = 1)$$

is written by a theoretical formula $A \cdot LiNi_x'Co_y'Mn_z'O_2 - (1 - A) \cdot Li(Li_{1/3}Mn_{2/3})O_2$ ($x' + y' + z' = 1$). In this theoretical formula, the ratio of the amount of Li to the amount of Mn in $Li(Li_{1/3}Mn_{2/3})O_2$ is 2.

On the other hand, it is assumed that the actual "Li excess type" active material is a solid solution of $LiNi_x'Co_y'Mn_z'O_2$ and $Li(Li_{1/3}Mn_{2/3})O_2$. Furthermore, it is obvious that the average valence of the transition metal contained in $LiNi_x'Co_y'Mn_z'O_2$ is trivalent, and it is known that the oxidation number of Co is trivalent and the oxidation number of Mn is tetravalent. Based on the above, it is led that the oxidation number of Ni present in $LiNi_x'Co_y'Mn_z'O_2$ is bivalent. Then, it is led that $Ni_{2+}$ and $Mn_{4+}$ are present in equimolar amounts, and relational expressions of $x' = z'$, $A x' = x$, $A y' = y$ are derived. At this time, among the amount of Li contained in the entire actual "Li excess type" active material, the amount of Li contained in $LiNi_x'Co_y'Mn_z'O_2$ is expressed as

$$A x' + A y' + A x' = 2x + y,$$

and the amount of Li contained in $Li(Li_{1/3}Mn_{2/3})O_2$ is expressed as

$$a \cdot (2x + y) = a \cdot 2x \cdot y.$$

Further, among the amount of Mn contained in the entire actual "Li excess type" active material, the amount of Mn contained in $LiNi_x'Co_y'Mn_z'O_2$ is expressed as

$$A x' = x,$$

and the amount of Mn contained in $Li(Li_{1/3}Mn_{2/3})O_2$ is expressed as z - x.

Therefore, in the actual "Li excess type" active material, the ratio of the amount of Li to the amount of Mn contained in $Li(Li_{1/3}Mn_{2/3})O_2$ in the above formula is $(a - 2x - y)/(z - x)$.

Therefore, $2 - (a - 2x - y)/(z - x)$ expresses a deviation between the ratio of the amount of Li to the amount of Mn in $Li(Li_{1/3}Mn_{2/3})O_2$ on the above theoretical formula, that is, 2 (stoichiometric ratio), and the ratio of the amount of Li to the amount of Mn in $Li(Li_{1/3}Mn_{2/3})O_2$ in the actual "Li excess type" active material.

The lithium transition metal composite oxide according to the second embodiment not according to the invention, in the "Li excess type" active material represented by $Li_aNi_xCo_yMn_zO_{1+a}$ ($1 < a$, $x < z$, $x + y + z = 1$), has a value of y representing the molar ratio of Co in transition metals (Ni, Co and Mn) in the range of $0 \leq y \leq 0.105$, and a value of the $2 - (a - 2x - y)/(z - x)$ in the range of $-0.06 \leq 2 - (a - 2x - y)/(z - x) \leq 0.06$. By setting the ratio of the amount of Li to the amount of Mn in $Li(Li_{1/3}Mn_{2/3})O_2$ in the actual "Li excess type" active material within a specified range while reducing the amount of transition metal elements causing valence change accompanying charging and discharging in $LiMeO_2$, by reducing the amount of Co, a positive active material having high energy density and high energy density retention rate with charge-discharge cycles is obtained.

Further, the value of x representing the molar ratio of Ni in the transition metals (Ni, Co and Mn) is preferably 0.37 or less, more preferably 0.35 or less, and further preferably 0.34 or less. Also, the value of x is preferably 0.20 or more, more preferably 0.30 or more, and further preferably 0.32 or more. Moreover, the value of y representing the molar ratio of Co in the transition metals (Ni, Co and Mn) is preferably 0.10 or less, more preferably 0.05 or less, further preferably 0.02 or less, particularly preferably 0.016 or less, and most preferably 0. Furthermore, the value of z representing the molar ratio of Mn in the transition metals (Ni, Co and Mn) is preferably 0.55 or more, more preferably 0.60 or more, further preferably 0.64 or more, particularly preferably 0.65 or more, and most preferably 0.66 or more. In addition, the value of z is preferably 0.70 or less, and more preferably 0.68 or less.

In the lithium transition metal oxide according to the second embodiment not according to the invention, the BET specific surface area is preferably small so that the contact area between the active material particles and the nonaqueous electrolyte is not too large, and is preferably 6.5 m$^2$/g or less, more preferably 6.0 m$^2$/g or less, further preferably 5.5 m$^2$/g or less, particularly preferably 5.0 m$^2$/g or less, and most preferably 4.5 m$^2$/g or less. However, in order for the reaction field of the entering and exiting of Li$^+$ in the active material to have proper size, the BET specific surface area is preferably 3.5 m$^2$/g or more, and more preferably 4.0 m$^2$/g or more.

In the present specification, the specific surface area of the positive active material is measured under the following conditions. Using the positive active material particles as a measurement sample, the adsorbed amount [m$^2$] of nitrogen on the measurement sample is determined by one point method using a specific surface area measurement apparatus (trade name: MONOSORB) manufactured by YUASA IONICS Co., Ltd. The charge amount of the measurement sample is 0.5 g $\pm$ 0.01 g. The preliminary heating is performed at 120°C for 15 minutes. Cooling is performed using liquid nitrogen, and the nitrogen gas adsorption amount in the cooling process is measured. The value obtained by dividing the measured adsorption amount (m$^2$) by an active material mass (g) is defined as the BET specific surface area.

The lithium transition metal composite oxide according to the present embodiment can be made to have an aluminum compound at least on its surface by applying well-known techniques. By the presence of the aluminum compound on the particle surface, direct contact between the active material and the nonaqueous electrolyte is prevented, and deterioration such as structural change accompanying oxidation of the active material can be suppressed. In this case, the abundance of the aluminum compound is preferably 0.1% by mass or more and more preferably 0.2% by mass or more in terms of metal Al, based on the lithium transition metal composite oxide. When the abundance of the aluminum compound is 0.1% by mass or more in terms of metal Al, the surface of the lithium transition metal composite oxide is sufficiently covered with the aluminum compound, and the direct contact between the active material and the nonaqueous electrolyte can be prevented and the effect of suppressing deterioration such as structural change accompanying oxidation of the active material can be sufficiently exerted. Also, the abundance of the aluminum compound is preferably 0.7% by mass or less and more preferably 0.6% by mass or less in terms of metal Al, based on the lithium transition metal composite oxide. When the abundance of the aluminum compound is 0.7% by mass or less in terms of metal Al, it is possible to reduce the risk of increase in resistance of the electrode with the presence of the aluminum compound, which is preferable.

(Production Method of Positive Active Material)

Next, a method of producing a positive active material according to a first embodiment will be described along the first aspect of the present invention.

First, an aqueous solution of a transition metal compound containing Ni and Mn, or Ni, Co and Mn whose molar ratios x, y, and z of Ni, Co, and Mn are adjusted to be 0.315 < x < 0.35, 0 ≤ y < 0.02, and 0.655 < z < 0.675 (x + y + z = 1), and an alkaline aqueous solution are supplied to a reaction tank, and precursor particles containing a transition metal (powder of coprecipitated precursor) are produced by coprecipitation reaction. Next, the precursor particles and the lithium compound are mixed so that, when the molar ratio of Li in the lithium transition metal composite oxide is w, the value of (w - 2x - y)/w is in the range of 0.475 < (w - 2x - y)/w < 0.51 (w> 1), and the mixture is fired to produce lithium transition metal composite oxide particles.

Next, a method of producing a positive active material according to a second embodiment will be described along the second aspect not according to the present invention.

First, an aqueous solution of a transition metal compound containing Ni and Mn, or Ni, Co and Mn so that molar ratios x, y and z of Ni, Co and Mn with respect to the molar ratio of transition metal (x + y + z = 1) are adjusted to be 0 ≤ y ≤ 0.105, x < z, and an alkaline aqueous solution are supplied to a reaction tank, and precursor particles containing a transition metal (powder of coprecipitated precursor) are produced by coprecipitation reaction. Next, the precursor particles and the lithium compound are mixed so that, when the molar ratio of Li in the lithium transition metal composite oxide is a, the value of ω = 2 - (a - 2x - y)/(z - x) is in the range of -0.06 ≤ ω ≤ 0.06 (1 < a), and the mixture is fired to produce lithium transition metal composite oxide particles.

The precursor particles containing a transition metal in the present embodiment can be obtained by supplying the mixed solution containing Ni salt, Mn salt and optionally Co salt having a predetermined concentration as described above and an alkaline aqueous solution to a reaction tank, controlling the pH to 6 to 13, circulating the overflowed suspension to the reaction tank while adjusting the concentration rate in a concentration tank connected to the overflow pipe, and performing reaction until the concentration of the precursor particles in the reaction tank and a settling tank becomes 0.1 to 15 mol/L. Alternatively, precursor particles may be obtained by overflow, without providing a concentration tank. After the reaction, water washing, drying and crushing may be carried out according to a conventional method.

As the transition metal compounds (Ni salt, Mn salt, Co salt), sulfate, nitrate, chloride and the like can be used.

The temperature of the reaction tank is preferably maintained at 35°C to 60°C. By using the precursor particles obtained by preparing the raw materials so that the composition of the transition metal compound falls within the above range and reacting at 35°C or more, a positive active material having high energy density and high energy density retention rate with charge-discharge cycles is obtained.

The precursor particles containing a transition metal in the present embodiment are not particularly limited, and various transition metal compounds can be used. For example, oxides, hydroxides, carbonates or mixtures thereof are preferable, and hydroxides or carbonates of transition metals are more preferable.

The preferred pH of the reaction tank when preparing the precursor is 7 to 9 in the case of carbonate and 10 to 12 in the case of hydroxide. A coprecipitated precursor can be produced using, together with the aqueous solution of a transition metal compound, as the alkaline aqueous solution, in the case of a carbonate precursor, an aqueous sodium carbonate solution, an aqueous potassium carbonate solution, an aqueous lithium carbonate solution, or the like. Alternatively, a coprecipitated precursor can be produced using, in the case of a hydroxide precursor, an aqueous sodium hydroxide solution, an aqueous potassium hydroxide solution, an aqueous lithium hydroxide solution, or the like.

Further, a complexing agent may be charged into the reaction tank together with an alkaline aqueous solution.

As the complexing agent, one or more selected from ammonium ion suppliers, hydrazine, ethylenediaminetetraacetic acid, nitritotriacetic acid, uracil diacetic acid, dimethylglyoxime, dithizone, oxine, acetylacetone or glycine can be used.

The precursor particles in the present embodiment preferably have an average particle size of 1.5 to 50 $\mu$m and a BET specific surface area of 5 to 300 $m^2$/g.

The lithium compound used in the present embodiment is not particularly limited, and various lithium salts can be used. Examples thereof include lithium hydroxide monohydrate, lithium nitrate, lithium carbonate, lithium acetate, lithium bromide, lithium chloride, lithium citrate, lithium fluoride, lithium iodide, lithium lactate, lithium oxalate, lithium phosphate, lithium pyruvate, lithium sulfate, lithium oxide and the like, and lithium carbonate is preferred. As the mixing ratio in the case of mixing the lithium compound, it is preferable to charge the Li compound excessively by about 1 to 5% as compared with the predetermined molar ratio to the precursor particles, in anticipation that a part of the Li compound disappears during the firing.

Further, the lithium compound used has an average particle size of preferably 50 $\mu$m or less. More preferably 30 $\mu$m or less. When the average particle size of the lithium compound exceeds 50 $\mu$m, mixing with the precursor particles becomes nonuniform, making it difficult to obtain composite oxide particle powder with good crystallinity.

The mixing treatment of the precursor particles containing a transition metal and the lithium compound may be either dry or wet as long as uniform mixing is possible.

The mixing treatment of the precursor particle powder containing a transition metal and the lithium compound may be performed at once, or a fired product obtained by mixing the precursor particle powder containing a transition metal and the Li compound and firing the mixture may be added with a Li compound and fired again.

At this time, the firing temperature is preferably 400 to 1500°C. At a temperature less than 400°C, the reaction with Li and Ni, and Mn does not proceed sufficiently, thus they are not sufficiently compounded. At a temperature exceeding 1500°C, sintering proceeds too much, which is not preferable. The firing temperature is more preferably in the range of 600 to 1200°C, and still more preferably in the range of 750 to 1050°C. The atmosphere during firing is preferably an oxidizing gas atmosphere, and more preferably normal air. The firing time is preferably 1 to 30 hours.

In the present embodiment, the obtained positive active material particle powder is composed of a compound having at least a crystal system belonging to the space group R-3m and a crystal system belonging to the space group C2/m, C2/c or P3$_1$12 at a specific ratio. In order for the compound obtained by firing to have such two crystal systems at a specific ratio, basically, precursor particles should be prepared so as to have a Mn content, that is, Mn/(Ni + Mn) or Mn/(Ni + Co + Mn), of 0.5 or more, and preferably in the range of 0.55 to 0.70 in terms of molar ratio. Examples of the method of preparing the precursor particles within the above range include a method of adjusting the amounts of Mn salt, Ni salt, and optional Co salt which are raw materials of the precursor. The crystal system belonging to the space group R-3m is derived from the above LiMeO$_2$ compound, and the crystal system belonging to the space group C2/m, C2/c or P3$_1$12 is mainly derived from Li$_2$MnO$_3$. These compounds are simultaneously formed by a series of production methods, and the ratio thereof is determined by the Mn content of the precursor and the mixing amount of the Li compound.

As described above, the particles of the lithium transition metal composite oxide obtained by mixing and firing the precursor particles and the lithium compound can be used as it is or can be crushed to have a desired particle size and used, as the positive active material.

Further, as is well known, by bringing particles of the lithium transition metal composite oxide into contact with an aqueous solution of aluminum sulfate or the like, an aluminum compound may be allowed to present on the surface of the particles to form a positive active material.

(Negative Active Material)

The negative active material is not limited. Any material may be selected as long as it can release or occlude lithium ions. Examples thereof include titanium-based materials such as lithium titanate having a spinel crystal structure represented by $Li[Li_{1/3}Ti_{5/3}]O_4$, alloy-based materials such as Si, Sb, and Sn, lithium metal, lithium alloys (lithium metal-containing alloys such as lithium-silicon, lithium-aluminum, lithium-lead, lithium-tin, lithium-aluminum-tin, lithium-gallium and wood alloy), lithium composite oxides (lithium-titanium), silicon oxide, alloys capable of occluding and releasing lithium, carbon materials (such as graphite, hard carbon, low-temperature fired carbon, and amorphous carbon), and the like.

(Positive Electrode/Negative Electrode)

The powder of positive active material and the powder of negative active material preferably have an average particle size of 100 $\mu$m or less. In particular, the powder of positive active material is preferably 15 $\mu$m or less for the purpose of improving high power characteristics of a nonaqueous electrolyte battery. In order to obtain the powder in a predetermined shape, there are a method of preparing a precursor of a predetermined size, a method of using a crusher, a classifier or the like, and the like. For example, a mortar, a ball mill, a sand mill, a vibration ball mill, a planetary ball mill, a jet mill, a counter jet mill, a swirling air flow jet mill, a sieve or the like is used. At the time of crushing, wet crushing in co-presence of water or an organic solvent such as hexane can also be employed. The classification method is not particularly limited, and a sieve, an air classifier or the like is used as required in both dry and wet methods.

The positive electrode and negative electrode may contain, in addition to the active material, a conductive agent, a binder, a thickener, a filler and the like as other constituent components.

The conductive agent is not limited as long as it is an electron-conductive material that has no adverse effect on battery performance, and normally, conductive materials such as natural graphite (scaly graphite, flake graphite, earthy graphite, etc.), artificial graphite, carbon black, acetylene black, Ketjen black, carbon whisker, carbon fiber, metal (copper, nickel, aluminum, silver, gold, etc.) powder, metal fiber and conductive ceramic material can be contained singly or as a mixture thereof.

Of these, acetylene black is preferable as the conductive agent from the viewpoint of electronic conductivity and coatability. The addition amount of the conductive agent is preferably 0.1% by weight to 50% by weight and particularly preferably 0.5% by weight to 30% by weight, based on the total weight of the positive electrode or the negative electrode. In particular, when acetylene black is crushed into ultrafine particles of 0.1 to 0.5 $\mu$m, the required amount of carbon can be reduced, which is preferable. In order to sufficiently mix the conductive agent with the positive active material, it is possible to use a powder mixer such as a V-type mixer, an S-type mixer, a grinding machine, a ball mill or a planetary ball mill, in a dry or wet method.

As the binder, normally, thermoplastic resins such as polytetrafluoroethylene (PTFE), polyvinylidene fluoride (PVDF), polyethylene and polypropylene; and polymers having rubber elasticity such as ethylene-propylene-diene terpolymer (EPDM), sulfonated EPDM, styrene-butadiene rubber (SBR) and fluororubber can be used singly or as a mixture of two or more of them. The addition amount of the binder is preferably 1 to 50% by weight, and particularly preferably 2 to 30% by weight, based on the total weight of the positive electrode or the negative electrode.

The filler is not limited as long as it is a material that has no adverse effect on battery performance. An olefin-based polymer such as polypropylene or polyethylene, amorphous silica, alumina, zeolite, glass, carbon or the like is normally used. The addition amount of the filler is preferably 30% by weight or less, based on the total amount of the positive electrode or the negative electrode.

The positive electrode and the negative electrode are suitably prepared by mixing the aforementioned main components (the positive active material in the positive electrode and the negative electrode material in the negative electrode) and other materials to form a mixture, and mixing the mixture with an organic solvent such as N-methylpyrrolidone or toluene, or water, followed by applying or pressure-bonding the resulting mixed liquid onto a current collector of an aluminum foil or the like, and carrying out a heating treatment at a temperature of about 50°C to 250°C for about 2 hours. For the application method, for example, it is preferable to perform application in any thickness and any shape using means such as roller coating by an applicator roll or the like, screen coating, a doctor blade system, spin coating or a bar coater, but the application method is not limited thereto.

(Nonaqueous Electrolyte)

The nonaqueous electrolyte used in the lithium secondary battery according to the present embodiment is not limited, and those that are generally proposed to be used in lithium batteries and the like can be used. Examples of the nonaqueous solvent used in the nonaqueous electrolyte may include, but are not limited to, cyclic carbonates such as propylene carbonate, ethylene carbonate, butylene carbonate, chloroethylene carbonate and vinylene carbonate; cyclic

esters such as $\gamma$-butyrolactone and $\gamma$-valerolactone; chain carbonates such as dimethyl carbonate, diethyl carbonate and ethylmethyl carbonate; chain esters such as methyl formate, methyl acetate and methyl butyrate; tetrahydrofuran or derivatives thereof; ethers such as 1,3-dioxane, 1,4-dioxane, 1,2-dimethoxyethane, 1,4-dibutoxyethane and methyl diglyme; nitriles such as acetonitrile and benzonitrile; dioxolane or derivatives thereof and ethylene sulfide, sulfolane, sultone or derivatives thereof alone or mixtures of two or more thereof.

Examples of the electrolyte salt used in the nonaqueous electrolyte include inorganic ion salts including one of lithium (Li), sodium (Na) and potassium (K), such as $LiClO_4$, $LiBF_4$, $LiAsF_6$, $LiPFs$, $LiSCN$, $LiBr$, $Lil$, $Li_2SO_4$, $Li_2B_{10}Cl_{10}$, $NaClO_4$, $Nal$, $NaSCN$, $NaBr$, $KClO_4$ and $KSCN$; and organic ion salts such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phthalate, lithium stearylsulfonate, lithium octylsulfonate and lithium dodecylbenzenesulfonate, and these ionic compounds can be used alone or in admixture of two or more thereof.

Further, by mixing $LiPF_6$ or $LiBF_4$ with a lithium salt having a perfluoroalkyl group, such as $LiN(C_2F_5SO_2)_2$, the viscosity of the electrolyte can be further reduced, and therefore low-temperature characteristics can be further enhanced, and self discharge can be suppressed, which is more preferable.

In addition, an ambient temperature molten salt or an ionic liquid may be used as the nonaqueous electrolyte.

The concentration of the electrolyte salt in the nonaqueous electrolyte is preferably 0.1 mol/l to 5 mol/L, and further preferably 0.5 mol/L to 2.5 mol/L, for reliably obtaining a nonaqueous electrolyte battery having high battery characteristics.

(Separator) As a separator, it is preferred that a porous membrane, a nonwoven fabric or the like, which shows excellent high rate discharge performance, be used alone or in combination. Examples of the material constituting the separator for a nonaqueous electrolyte battery include polyolefin-based resins typified by polyethylene, polypropylene and the like, polyester-based resins typified by polyethylene terephthalate, polybutylene terephthalate and the like, polyvinylidene fluoride, vinylidene fluoride-hexafluoropropylene copolymers, vinylidene fluoride-perfluoro vinyl ether copolymers, vinylidene fluoride-tetrafluoroethylene copolymers, vinylidene fluoride-trifluoroethylene copolymers, vinylidene fluoride-fluoroethylene copolymers, vinylidene fluoride-hexafluoroacetone copolymers, vinylidene fluoride-ethylene copolymers, vinylidene fluoride-propylene copolymers, vinylidene fluoride-trifluoropropylene copolymers, vinylidene fluoride-tetrafluoroethylene-hexafluoropropylene copolymers, vinylidene fluoride-ethylene-tetrafluoroethylene copolymers, and the like.

The porosity of the separator is preferably 98% by volume or less from the viewpoint of strength. Moreover, the porosity is preferably 20% by volume or more from the viewpoint of charge-discharge characteristics.

In addition, as the separator, a polymer gel composed of a polymer such as acrylonitrile, ethylene oxide, propylene oxide, methyl methacrylate, vinyl acetate, vinyl pyrrolidone or polyvinylidene fluoride and an electrolyte may be used. Use of the nonaqueous electrolyte in a gel form as described above is preferred from the viewpoint of being effective at preventing liquid leakage.

Further, use of the aforementioned porous membrane, nonwoven fabric or the like and the polymer gel in combination for the separator is preferred since liquid retaining property of the electrolyte is improved. That is, a film in which the surface and the microporous wall face of a polyethylene microporous membrane are coated with a solvophilic polymer having a thickness of several micrometers or less is formed, and an electrolyte is held within the micropores of the film, so that the solvophilic polymer is formed into a gel.

Examples of the solvophilic polymer include, in addition to polyvinylidene fluoride, polymers in which an acrylate monomer having an ethylene oxide group, an ester group or the like, an epoxy monomer, a monomer having an isocyanate group or the like is crosslinked, and the like. The monomer can be subjected to a crosslinking reaction by performing electron beam (EB) irradiation, or adding a radical initiator and heating or performing ultraviolet (UV) irradiation, or the like.

(Other Components of Battery)

Other components of the battery include a terminal, an insulating plate, a battery case and the like, and for these parts, those which have been conventionally used may be used as they are.

(Configuration of Lithium Secondary Battery)

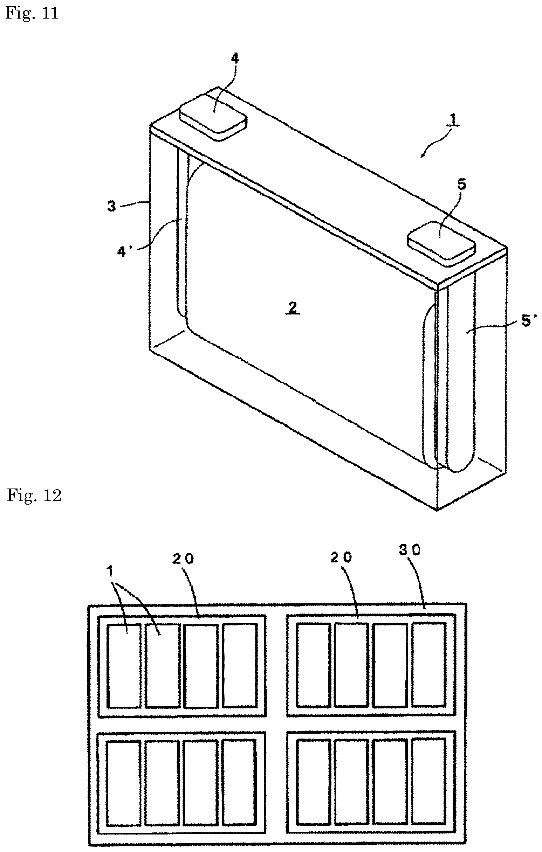

Fig. 11 is an external perspective view of a rectangular lithium secondary battery 1 according to one aspect of the present invention. Incidentally, Fig. 11 is a perspective view of the inside of a case. In the lithium secondary battery 1 shown in Fig. 11, an electrode group 2 is housed in a battery case 3. The electrode group 2 is formed by winding a positive electrode including a positive active material and a negative electrode including a negative active material with a separator interposed therebetween. The positive electrode is electrically connected to a positive electrode terminal 4 via a positive electrode lead 4', and the negative electrode is electrically connected to a negative electrode terminal 5 via a negative electrode lead 5'.

The shape of the lithium secondary battery according to one aspect of the present invention is not particularly limited, and examples thereof include a cylindrical battery, a prismatic battery (rectangular battery), a flat battery, and the like.

(Configuration of Energy Storage Apparatus)

The present embodiment can also be realized as an energy storage apparatus in which a plurality of the lithium secondary batteries is assembled. An embodiment of the energy storage apparatus is shown in Fig. 12. In Fig. 12, an energy storage apparatus 30 includes a plurality of energy storage units 20. Each of the energy storage units 20 includes a plurality of lithium secondary batteries 1. The energy storage apparatus 30 can be mounted as a power source for automobiles such as electric vehicles (EV), hybrid vehicles (HEV) and plug-in hybrid electric vehicles (PHEV).

EXAMPLES

Examples of the present invention will be described below. However, these examples are examples of the present invention, and it is a matter of course that the present invention is not limited to these examples.

Example 1

Example 1 will be described along the first aspect of the present invention.

<Example 1-1>

Water of 8 L was poured into a sealed reaction tank and maintained at 50°C while passing nitrogen gas. Further, an aqueous mixed sulfate solution adjusted so that the molar ratio of Ni and Mn became 0.338 : 0.662 and an aqueous sodium carbonate solution were continuously added thereto with stirring so that the pH became 8.0 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Mn) was 1.33 and sufficiently mixed. This was fired at 930°C for 4 hrs under an air flow using an electric furnace to obtain an intermediate fired product (lithium transition metal composite oxide).

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 120°C. This was fired at 400°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Example 1-2>

Water of 8 L was poured into a sealed reaction tank and maintained at 40°C while passing nitrogen gas. Further, an aqueous mixed sulfate solution adjusted so that the molar ratio of Ni and Mn became 0.341 : 0.659 and an aqueous sodium carbonate solution were continuously added thereto with stirring so that the pH became 8.0 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 100°C overnight to obtain a powder of coprecipitated precursor.

The resulting powder of coprecipitated precursor and lithium carbonate powder were weighed so that Li/(Ni + Mn) was 1.31 and sufficiently mixed. This was fired at 900°C for 6 hrs under an air flow using an electric furnace to obtain an intermediate fired product.

This intermediate fired product of 100 g was charged into 30 mL of pure water maintained at 35°C with stirring. Next, 6 mL of a mixed aqueous solution adjusted to have a sulfuric acid concentration of 0.04 mol/L and an aluminum sulfate concentration of 1.0 mol/L was added dropwise to the slurry of the intermediate fired product, filtered, washed with water and dried at 100°C. This was fired at 450°C for 4 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Example 1-3>

Water of 8 L was poured into a sealed reaction tank and maintained at 40°C while passing nitrogen gas. Further, an aqueous mixed sulfate solution adjusted so that the molar ratio of Ni and Mn became 0.341 : 0.659 and an aqueous sodium carbonate solution were continuously added thereto with stirring so that the pH became 8.4 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 100°C overnight to obtain a powder of coprecipitated precursor.

The resulting powder of coprecipitated precursor and lithium carbonate powder were weighed so that Li/(Ni + Mn) was 1.32 and sufficiently mixed. This was fired at 880°C for 6 hrs under an air flow using an electric furnace to obtain an intermediate fired product.

This intermediate fired product of 100 g was charged into 30 mL of pure water maintained at 35°C with stirring. Next, 6 mL of a mixed aqueous solution adjusted to have an aluminum sulfate concentration of 0.5 mol/L was added dropwise to the slurry of the intermediate fired product, filtered, washed with water and dried at 100°C. This was fired at 450°C for 4 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Example 1-4>

Water of 8 L was poured into a sealed reaction tank and maintained at 50°C while passing nitrogen gas. Further, an aqueous mixed sulfate solution adjusted so that the molar ratio of Ni and Mn became 0.340 : 0.660 and an aqueous sodium carbonate solution were continuously added thereto with stirring so that the pH became 8.4 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Mn) was 1.30 and sufficiently mixed. This was fired at 850°C for 6 hrs under an air flow using an electric furnace to obtain an intermediate fired product.

This intermediate fired product of 100 g was charged into 30 mL of pure water maintained at 35°C with stirring. Next, 6 mL of a mixed aqueous solution adjusted to have an aluminum sulfate concentration of 0.5 mol/L was added dropwise to the slurry of the intermediate fired product, filtered, washed with water and dried at 120°C. This was fired at 450°C for 4 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Example 1-5>

Water of 6 L was poured into a sealed reaction tank and maintained at 50°C while passing nitrogen gas. Further, an aqueous mixed sulfate solution adjusted so that the molar ratio of Ni, Co, and Mn became 0.319 : 0.016 : 0.666 and an aqueous sodium carbonate solution were continuously added thereto with stirring so that the pH became 8.4 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.32 and sufficiently mixed. This was fired at 850°C for 6 hrs under an air flow using an electric furnace to obtain an intermediate fired product.

This intermediate fired product of 100 g was charged into 30 mL of pure water maintained at 35°C with stirring. Next, 6 mL of a mixed aqueous solution adjusted to have an aluminum sulfate concentration of 1.5 mol/L was added dropwise to the slurry of the intermediate fired product, filtered, washed with water and dried at 120°C. This was fired at 450°C for 4 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-1>

Water of 8 L was poured into a sealed reaction tank and maintained at 50°C while passing nitrogen gas. Further, an aqueous mixed sulfate solution adjusted so that the molar ratio of Ni, Co, and Mn became 0.290 : 0.061 : 0.649 and an aqueous sodium carbonate solution were continuously added thereto with stirring so that the pH became 8.0 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Co + Mn) was 1.33 and sufficiently mixed. This was fired at 850°C for 4 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 120°C. This was fired at 400°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-2>

Water of 8 L was poured into a sealed reaction tank and maintained at 50°C while passing nitrogen gas. Further, an aqueous mixed sulfate solution adjusted so that the molar ratio of Ni, Co, and Mn became 0.283 : 0.095 : 0.622 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.28 and sufficiently mixed. This was fired at 850°C for 4 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have an aluminum sulfate concentration of 1.0 mol/L was added dropwise to the slurry of the intermediate fired product, filtered, washed with water and dried at 100°C. This was fired at 450°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-3>

Water of 8 L was poured into a sealed reaction tank and maintained at 50°C while passing nitrogen gas. Further, an aqueous mixed sulfate solution adjusted so that the molar ratio of Ni, Co, and Mn became 0.347 : 0.152 : 0.501 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Co + Mn) was 1.11 and sufficiently mixed. This was fired at 950°C for 6 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have an aluminum sulfate concentration of 0.5 mol/L was added dropwise to the slurry of the intermediate fired product, filtered, washed with water and dried at 120°C. This was fired at 500°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-4>

Water of 8 L was poured into a sealed reaction tank and maintained at 50°C while passing nitrogen gas. Further, an aqueous mixed sulfate solution adjusted so that the molar ratio of Ni, Co and Mn became 0.296 : 0.152 : 0.552 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Co + Mn) was 1.21 and sufficiently mixed. This was fired at 850°C for 5 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 0.5 mol/L was added dropwise to the slurry of the intermediate fired product, filtered, washed with water and dried at 120°C. This was fired at 450°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-5>

Water of 8 L was poured into a sealed reaction tank and maintained at 50°C while passing nitrogen gas. Further, an aqueous mixed sulfate solution adjusted so that the molar ratio of Ni, Co, and Mn became 0.383 : 0.102 : 0.515 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.13 and sufficiently mixed. This was fired at 900°C for 6 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 100°C. This was fired at 500°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-6>

Water of 8 L was poured into a sealed reaction tank and maintained at 50°C while passing nitrogen gas. Further, an aqueous mixed sulfate solution adjusted so that the molar ratio of Ni, Co, and Mn became 0.247 : 0.152 : 0.601 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.31 and sufficiently mixed. This was fired at 850°C for 6 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.10 mol/L and an aluminum sulfate concentration of 1.5 mol/L was added dropwise to the slurry of the intermediate fired product, filtered, washed with water and dried at 120°C. This was fired at 400°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-7>

Water of 8 L was poured into a sealed reaction tank and maintained at 50°C while passing nitrogen gas. Further, an aqueous mixed sulfate solution adjusted so that the molar ratio of Ni, Co, and Mn became 0.244 : 0.099 : 0.657 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Co + Mn) was 1.36 and sufficiently mixed. This was fired at 850°C for 6 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 120°C. This was fired at 450°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-8>

Water of 8 L was poured into a sealed reaction tank and maintained at 50°C while passing nitrogen gas. Further, an aqueous mixed sulfate solution adjusted so that the molar ratio of Ni, Co, and Mn became 0.193 : 0.201 : 0.605 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 100°C overnight to obtain a powder of coprecipitated precursor.

The resulting powder of coprecipitated precursor and lithium carbonate powder were weighed so that Li/(Ni + Co + Mn) was 1.36 and sufficiently mixed. This was fired at 900°C for 5 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.5 mol/L was added dropwise to the slurry of the intermediate fired product, filtered, washed with water and dried at 100°C. This was fired at 400°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-9>

Water of 8 L was poured into a sealed reaction tank and maintained at 50°C while passing nitrogen gas. Further, an aqueous mixed sulfate solution adjusted so that the molar ratio of Ni, Co, and Mn became 0.193 : 0.302 : 0.505 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.30 and sufficiently mixed. This was fired at 900°C for 5 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have an aluminum sulfate concentration of 0.5 mol/L was added dropwise to the slurry of the intermediate fired product, filtered, washed with water and dried at 100°C. This was fired at 450°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 1-10>

Water of 8 L was poured into a sealed reaction tank and maintained at 50°C while passing nitrogen gas. Further, an aqueous mixed sulfate solution adjusted so that the molar ratio of Ni, Co, and Mn became 0.182 : 0.124 : 0.694 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.39 and sufficiently mixed. This was fired at 950°C for 5 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 100°C. This was fired at 500°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

For all powders of positive active materials described above, the lattice constant a was obtained by using an X-ray diffractometer (manufactured by Rigaku Corporation, model name: SmartLab) and adopting the above conditions.

(Fabrication of Lithium Secondary Battery)

A lithium secondary battery was fabricated by the following procedure, using each of the powders of positive active material (active material) according to the examples and the comparative examples.

A paste for application was prepared in which the active material, acetylene black (AB) and polyvinylidene fluoride (PVdF) were kneaded and mixed in a mass ratio of 90 : 5 : 5 and dispersed with N-methylpyrrolidone as a dispersion medium. The application paste was applied onto one surface of an aluminum foil current collector having a thickness of 20 $\mu$m to prepare a positive electrode plate. Incidentally, the mass and coating thickness of the active material applied per fixed area were equalized so that test conditions were the same among the lithium secondary batteries according to all examples and comparative examples.

For the purpose of accurately observing independent behavior of the positive electrode, metallic lithium was brought into close contact with a nickel foil current collector and used for a counter electrode, i.e., a negative electrode. Here, a sufficient amount of metallic lithium was placed on the negative electrode so that the capacity of the lithium secondary battery was not limited by the negative electrode.

As a nonaqueous electrolyte (electrolyte solution), a solution obtained by dissolving LiPF$_6$, so as to be 1 mol/L in concentration, in a mixed solvent of ethylene carbonate (EC)/ethylmethyl carbonate (EMC)/dimethyl carbonate (DMC) in a volume ratio of 6 : 7 : 7, was used. As a separator, a microporous membrane made of polypropylene, the surface of which was modified with polyacrylate, was used. As an outer case, a metal resin composite film made of polyethylene terephthalate (15 $\mu$m)/aluminum foil (50 $\mu$m)/metal-adhesive polypropylene film (50 $\mu$m) was used, the electrode was housed such that the open ends of a positive electrode terminal and a negative electrode terminal were externally exposed, fusion margins with the inner surfaces of the metal resin composite films facing each other were airtightly sealed except a portion forming an electrolyte solution filling hole, and the electrolyte solution was injected, followed by sealing the electrolyte solution filling hole.

(Initial Charge-Discharge Step)

Next, the lithium secondary battery was subjected to one cycle of initial charge-discharge step at 25°C. Charge was constant current constant voltage charge with a current of 0.1 C and a voltage of 4.6 V, and the charge termination condition was set at a time point at which the current value attenuated to 1/50. Discharge was constant current discharge with a current of 0.1 C and a final voltage of 2.0 V This charge-discharge was performed for one cycle. Here, a pausing process of 10 minutes was provided each after charge and after discharge. In this way, the lithium secondary battery was fabricated.

(Discharge Test at 1 C)

A discharge test at 1 C was performed at 25°C. Charge was constant current constant voltage charge with a current of 0.1 C and a voltage of 4.45 V, and the charge termination condition was set at a time point at which the current value attenuated to 1/50. Discharge was constant current discharge with a current of 1 C and a final voltage of 2.0 V Here, a pausing process of 10 minutes was provided each after charge and after discharge. The discharge capacity and the average voltage (V) at this time, and the energy density calculated as the product of them were recorded as "discharge capacity at 1 C (mAh/g)" and "average voltage (V) at 1 C", and "energy density at 1 C (mWh/g)", respectively.

(Charge-Discharge Cycle Test)

A charge-discharge test of 25 cycles was performed under an environment of 25°C. Charge was constant current charge with a current of 0.33 CA and an end-of-charge voltage of 4.45 V Discharge was constant current discharge with a current of 0.33 CA and an end-of-discharge voltage of 2.0 V

Here, a pause period of 10 minutes was provided each after charge and after discharge. The percentage of the energy density calculated as the product of the discharge capacity at the 25th cycle and the average voltage with respect to the energy density calculated as the product of the discharge capacity at the first cycle and the average voltage in the charge-discharge cycle test was recorded as "energy density retention rate (%)".

Test results of lithium secondary batteries, using each of the lithium transition metal composite oxides according to the examples and comparative examples as a positive active material for a lithium secondary battery, are shown in Table 1.

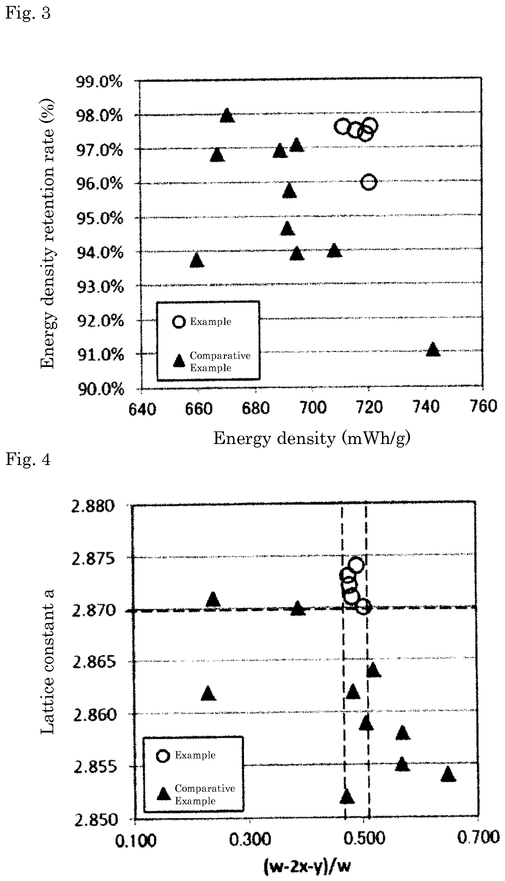

Also, graphs each plotting the energy density and the energy density retention rate with respect to (w - 2x - y)/w in the examples and comparative examples are shown in Figs. 1 and 2. Also, the relationship between the energy density and the energy density retention rate in the examples and comparative examples is shown in Fig. 3, and the relationship between (w - 2x - y)/w and the lattice constant a is shown in Fig. 4.

[Table 1]

| | Li (w) | Ni (x) | Co (y) | Mn (z) | (w-2x-y)/w | Lattice constant a | Discharge capacity at 1 C (mAh/g) | Average voltage at 1 C (V) | Energy density at 1 C (mWh/g) | Energy density retention rate (%) |
|---|---|---|---|---|---|---|---|---|---|---|
| Example 1-1 | 1.33 | 0.338 | 0 | 0.662 | 0.492 | 2.874 | 196.0 | 3.68 | 721 | 97.6% |
| Example 1-2 | 1.31 | 0.341 | 0 | 0.659 | 0.479 | 2.872 | 196.0 | 3.67 | 719 | 97.4% |
| Example 1-3 | 1.32 | 0.341 | 0 | 0.659 | 0.483 | 2.871 | 194.0 | 3.69 | 716 | 97.5% |
| Example 1-4 | 1.30 | 0.340 | 0 | 0.660 | 0.477 | 2.873 | 192.8 | 3.69 | 711 | 97.6% |
| Example 1-5 | 1.32 | 0.319 | 0.016 | 0.666 | 0.504 | 2.870 | 198.5 | 3.63 | 720 | 96.0% |
| Comparative Example 1-1 | 1.33 | 0.290 | 0.061 | 0.649 | 0.519 | 2.864 | 192.8 | 3.60 | 695 | 93.9% |
| Comparative Example 1-2 | 1.28 | 0.283 | 0.095 | 0.622 | 0.483 | 2.862 | 182.8 | 3.61 | 660 | 93.7% |
| Comparative Example 1-3 | 1.11 | 0.347 | 0.152 | 0.501 | 0.240 | 2.871 | 177.9 | 3.77 | 671 | 98.0% |
| Comparative Example 1-4 | 1.21 | 0.296 | 0.152 | 0.552 | 0.388 | 2.870 | 184.1 | 3.76 | 692 | 94.7% |
| Comparative Example 1-5 | 1.13 | 0.383 | 0.102 | 0.515 | 0.230 | 2.862 | 185.1 | 3.76 | 695 | 97.1% |
| Comparative Example 1-6 | 1.31 | 0.247 | 0.152 | 0.601 | 0.506 | 2.859 | 189.5 | 3.64 | 689 | 96.9% |
| Comparative Example 1-7 | 1.36 | 0.244 | 0.099 | 0.657 | 0.568 | 2.858 | 201.3 | 3.52 | 708 | 94.0% |
| Comparative Example 1-8 | 1.36 | 0.193 | 0.201 | 0.605 | 0.567 | 2.855 | 194.0 | 3.57 | 692 | 95.85 |
| Comparative Example 1-9 | 1.30 | 0.193 | 0.302 | 0.505 | 0.470 | 2.852 | 179.1 | 3.73 | 667 | 96.8% |
| Comparative Example 1-10 | 1.39 | 0.182 | 0.124 | 0.694 | 0.648 | 2.854 | 216.3 | 3.43 | 743 | 91.1% |

From Table 1 and Figs. 1 to 3, the following can be seen.

The positive active materials according to Examples 1-1 to 1-5 in which $(w - 2x - y)/w$ satisfies $0.47 < (w - 2x - y)/w < 0.51$ and satisfies $0.30 < x < 0.37$, $0 < y < 0.05$, $0.63 < z < 0.70$ have high energy density at 1 C and also have high energy density retention rate.

In Comparative Examples 1-1, 1-7, 1-8 and 1-10 in which $(w - 2x-y)/w$ is 0.51 or more and in Comparative Examples 1-3 to 1-5 of 0.47 or less, the energy density at 1 C is small except for Comparative Example 1-10 (see Fig. 1). In Comparative Example 1-10, $(w - 2x - y)/w$ is 0.648 which is far outside the range of the first embodiment and the energy density retention rate is as low as 91.1% (see Fig. 2) although the energy density is high.

In Comparative Examples 2, 6 and 9, $(w - 2x - y)/w$ is in the range of the first embodiment, but none of x, y and z satisfies the range of the first embodiment, and the energy density at 1 C is low.

It is only Examples 1-1 to 1-5 that both the energy density at 1 C and the energy density retention rate are excellent (see Fig. 3).

Furthermore, the relationship between $(w - 2x - y)/w$ and the lattice constant a is shown in Fig. 4. $(w - 2x - y)/w$ was $0.47 < (w - 2x - y)/w < 0.51$, and the lattice constant a was 2.870 Å or more, thus high energy density and high energy density retention rate could be realized.

Example 2

Example 2 will be described along the second aspect not according to the present invention, which does not exclude that Examples of Example 2 are according to the invention.

<Example 2-1>

Water of 8 L was poured into a sealed reaction tank and maintained at 50°C while passing nitrogen gas. Further, an aqueous mixed sulfate solution adjusted so that the molar ratio of Ni and Mn became 0.338 : 0.662 and an aqueous sodium carbonate solution were continuously added thereto with stirring so that the pH became 8.0 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Mn) was 1.33 and sufficiently mixed. This was fired at 930°C for 4 hrs under an air flow using an electric furnace to obtain an intermediate fired product (lithium transition metal composite oxide).

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 120°C. This was fired at 400°C for 5 hrs under an air flow using an electric furnace to obtain a powder of positive active material $Li_{1.33}Ni_{0.338}Mn_{0.662}O_{2.33}$ ($a = 1.33$, $x = 0.338$, $y = 0.662$ in formula $Li_aNi_xCo_yMn_zO_{1+a}$).

In the powder of positive active material, an aluminum compound is present in an amount of 0.3% by mass in terms of metal Al on the surface of the lithium transition metal composite oxide particles.

<Example 2-2>

Water of 8 L was poured into a sealed reaction tank and maintained at 50°C while passing nitrogen gas. Further, an aqueous mixed sulfate solution adjusted so that the molar ratio of Ni and Mn became 0.340 : 0.660 and an aqueous sodium carbonate solution were continuously added thereto with stirring so that the pH became 8.4 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Mn) was 1.30 and sufficiently mixed. This was fired at 850°C for 6 hrs under an air flow using an electric furnace to obtain an intermediate fired product.

This intermediate fired product of 100 g was charged into 30 mL of pure water maintained at 35°C with stirring. Next, 6 mL of a mixed aqueous solution adjusted to have an aluminum sulfate concentration of 0.5 mol/L was added dropwise to the slurry of the intermediate fired product, filtered, washed with water and dried at 120°C. This was fired at 450°C for 4 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Example 2-3>

Water of 8 L was poured into a sealed reaction tank and maintained at 40°C while passing nitrogen gas. Further, an aqueous mixed sulfate solution adjusted so that the molar ratio of Ni and Mn became 0.341 : 0.659 and an aqueous sodium carbonate solution were continuously added thereto with stirring so that the pH became 8.4 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 100°C overnight to obtain a powder of coprecipitated precursor.

The resulting powder of coprecipitated precursor and lithium carbonate powder were weighed so that Li/(Ni + Mn) was 1.32 and sufficiently mixed. This was fired at 880°C for 6 hrs under an air flow using an electric furnace to obtain an intermediate fired product.

This intermediate fired product of 100 g was charged into 30 mL of pure water maintained at 35°C with stirring. Next, 6 mL of a mixed aqueous solution adjusted to have an aluminum sulfate concentration of 0.5 mol/L was added dropwise to the slurry of the intermediate fired product, filtered, washed with water and dried at 100°C. This was fired at 450°C for 4 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Example 2-4>

Water of 8 L was poured into a sealed reaction tank and maintained at 40°C while passing nitrogen gas. Further, an aqueous mixed sulfate solution adjusted so that the molar ratio of Ni and Mn became 0.341 : 0.659 and an aqueous sodium carbonate solution were continuously added thereto with stirring so that the pH became 8.0 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 100°C overnight to obtain a powder of coprecipitated precursor.

The resulting powder of coprecipitated precursor and lithium carbonate powder were weighed so that Li/(Ni + Mn) was 1.31 and sufficiently mixed. This was fired at 900°C for 6 hrs under an air flow using an electric furnace to obtain an intermediate fired product.

This intermediate fired product of 100 g was charged into 30 mL of pure water maintained at 35°C with stirring. Next, 6 mL of a mixed aqueous solution adjusted to have a sulfuric acid concentration of 0.04 mol/L and an aluminum sulfate concentration of 1.0 mol/L was added dropwise to the slurry of the intermediate fired product, filtered, washed with water and dried at 100°C. This was fired at 450°C for 4 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Examples 2-5, not according to the invention>

Water of 8 L was poured into a sealed reaction tank and maintained at 50°C while passing nitrogen gas. Further, an aqueous mixed sulfate solution adjusted so that the molar ratio of Ni, Co, and Mn became 0.383 : 0.102 : 0.515 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.13 and sufficiently mixed. This was fired at 900°C for 6 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 100°C. This was fired at 500°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 2-1>

Water of 8 L was poured into a sealed reaction tank and maintained at 50°C while passing nitrogen gas. Further, an aqueous mixed sulfate solution adjusted so that the molar ratio of Ni, Co, and Mn became 0.193 : 0.302 : 0.505 and an aqueous sodium carbonate solution were continuously added thereto with stirring so that the pH became 8.5 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.30 and sufficiently mixed. This was fired at 900°C for 5 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have an aluminum sulfate concentration of 0.5 mol/L was added dropwise to the slurry of the intermediate fired product, filtered, washed with water and dried at 100°C. This was fired at 450°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 2-2>

Water of 8 L was poured into a sealed reaction tank and maintained at 50°C while passing nitrogen gas. Further, an aqueous mixed sulfate solution adjusted so that the molar ratio of Ni, Co, and Mn became 0.347 : 0.152 : 0.501 and an aqueous sodium carbonate solution were continuously added thereto with stirring so that the pH became 8.5 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Co + Mn) was 1.11 and sufficiently mixed. This was fired at 950°C for 6 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have an aluminum sulfate concentration of 0.5 mol/L was added dropwise to the slurry of the intermediate fired product, filtered, washed with water and dried at 120°C. This was fired at 500°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 2-3>

Water of 8 L was poured into a sealed reaction tank and maintained at 50°C while passing nitrogen gas. Further, an aqueous mixed sulfate solution adjusted so that the molar ratio of Ni, Co, and Mn became 0.193 : 0.201 : 0.605 and an aqueous sodium carbonate solution were continuously added thereto with stirring so that the pH became 8.5 ($\pm$ 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 100°C overnight to obtain a powder of coprecipitated precursor.

The resulting powder of coprecipitated precursor and lithium carbonate powder were weighed so that Li/(Ni + Co + Mn) was 1.36 and sufficiently mixed. This was fired at 900°C for 5 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.5 mol/L was added dropwise to the slurry of the intermediate fired product, filtered, washed with water and dried at 100°C. This was fired at 400°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 2-4>

Water of 8 L was poured into a sealed reaction tank and maintained at 50°C while passing nitrogen gas. Further, an aqueous mixed sulfate solution adjusted so that the molar ratio of Ni, Co and Mn became 0.296 : 0.152 : 0.552 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Co + Mn) was 1.21 and sufficiently mixed. This was fired at 850°C for 5 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 0.5 mol/L was added dropwise to the slurry of the intermediate fired product, filtered, washed with water and dried at 120°C. This was fired at 450°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 2-5>

Water of 8 L was poured into a sealed reaction tank and maintained at 50°C while passing nitrogen gas. Further, an aqueous mixed sulfate solution adjusted so that the molar ratio of Ni, Co, and Mn became 0.244 : 0.099 : 0.657 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Co + Mn) was 1.36 and sufficiently mixed. This was fired at 850°C for 6 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 120°C. This was fired at 450°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 2-6>

Water of 8 L was poured into a sealed reaction tank and maintained at 50°C while passing nitrogen gas. Further, an aqueous mixed sulfate solution adjusted so that the molar ratio of Ni, Co, and Mn became 0.290 : 0.061 : 0.649 and an aqueous sodium carbonate solution were continuously added thereto with stirring so that the pH became 8.0 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 120°C overnight to obtain a powder of coprecipitated precursor.

The resulting powder of coprecipitated precursor and lithium carbonate powder were weighed so that Li/(Ni + Co + Mn) was 1.33 and sufficiently mixed. This was fired at 850°C for 4 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 120°C. This was fired at 400°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 2-7>

Water of 8 L was poured into a sealed reaction tank and maintained at 50°C while passing nitrogen gas. Further, an aqueous mixed sulfate solution adjusted so that the molar ratio of Ni, Co, and Mn became 0.283 : 0.095 : 0.622 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.28 and sufficiently mixed. This was fired at 850°C for 4 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have an aluminum sulfate concentration of 1.0 mol/L was added dropwise to the slurry of the intermediate fired product, filtered, washed with water and dried at 100°C. This was fired at 450°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

<Comparative Example 2-8>

Water of 8 L was poured into a sealed reaction tank and maintained at 50°C while passing nitrogen gas. Further, an aqueous mixed sulfate solution adjusted so that the molar ratio of Ni, Co, and Mn became 0.182 : 0.124 : 0.694 and an aqueous sodium carbonate solution were continuously added thereto with stirring so that the pH became 8.5 (± 0.2). Only the filtrate was discharged to the outside of the system by a concentrator during the reaction while retaining the solid content in the reaction tank, and after the reaction, a slurry of coprecipitated product was collected. The collected slurry was filtered, washed with water, and dried at 80°C overnight to obtain a powder of coprecipitated precursor.

The resulting powder of coprecipitated precursor and lithium carbonate powder were weighed so that Li/(Ni + Co + Mn) was 1.39 and sufficiently mixed. This was fired at 950°C for 5 hrs under an air flow using an electric furnace to obtain an intermediate fired product.

This intermediate fired product of 100 g was charged into 20 mL of pure water maintained at 30°C with stirring. Next, 3 mL of a mixed aqueous solution adjusted to have a sulfuric acid concentration of 0.05 mol/L and an aluminum sulfate concentration of 1.0 mol/L was added dropwise to the slurry of the intermediate fired product, filtered, washed with water and dried at 100°C. This was fired at 500°C for 5 hrs under an air flow using an electric furnace to obtain a powder of positive active material.

In the powder of positive active material, an aluminum compound is present in an amount of 0.3% by mass in terms of metal Al on the surface of the lithium transition metal composite oxide particles.

[Confirmation of Crystal Structure]

For all powders of positive active materials described above, powder X-ray diffraction measurement was carried out using an X-ray diffractometer (manufactured by Rigaku Corporation, model name: SmartLab).

As a result, it was confirmed that the lithium transition metal composite oxide prepared in all the examples and comparative examples had an $\alpha$-NaFeO$_2$ structure.

[Measurement of Specific Surface Area]

The BET specific surface area was measured by adopting the measurement conditions described above. In measurement, gas adsorption through cooling using liquid nitrogen was carried out. In addition, the preliminary heating was performed at 120°C for 45 min before cooling. Further, the charge amount of the measurement sample was 1.0 to 1.2 g.

(Fabrication of Lithium Secondary Battery)

A lithium secondary battery was fabricated by the following procedure, using each of the powders of positive active material (active material) according to the examples and the comparative examples.

A paste for application was prepared in which the active material, acetylene black (AB) and polyvinylidene fluoride (PVdF) were kneaded and mixed in a mass ratio of 90 : 5 : 5 and dispersed with N-methylpyrrolidone as a dispersion medium. The application paste was applied onto one surface of an aluminum foil current collector having a thickness of 20 μm to prepare a positive electrode plate. Incidentally, the mass and coating thickness of the active material applied per fixed area were equalized so that test conditions were the same among the lithium secondary batteries according to all examples and comparative examples.

For the purpose of accurately observing independent behavior of the positive electrode, metallic lithium was brought into close contact with a nickel foil current collector and used for a counter electrode, i.e., a negative electrode. Here, a sufficient amount of metallic lithium was placed on the negative electrode so that the capacity of the lithium secondary battery was not limited by the negative electrode.

As a nonaqueous electrolyte (electrolyte solution), a solution obtained by dissolving $LiPF_6$, so as to be 1 mol/L in concentration, in a mixed solvent of ethylene carbonate (EC)/ethylmethyl carbonate (EMC)/dimethyl carbonate (DMC) in a volume ratio of 6 : 7 : 7, was used. As a separator, a microporous membrane made of polypropylene, the surface of which was modified with polyacrylate, was used. As an outer case, a metal resin composite film made of polyethylene terephthalate (15 $\mu$m)/aluminum foil (50 $\mu$m)/metal-adhesive polypropylene film (50 $\mu$m) was used, the electrode was housed such that the open ends of a positive electrode terminal and a negative electrode terminal were externally exposed, fusion margins with the inner surfaces of the metal resin composite films facing each other were airtightly sealed except a portion forming an electrolyte solution filling hole, and the electrolyte solution was injected, followed by sealing the electrolyte solution filling hole.

(Initial Charge-Discharge Step)

Next, the lithium secondary battery was subjected to one cycle of initial charge-discharge step at 25°C. Charge was constant current constant voltage charge with a current of 0.1 C and a voltage of 4.7 V, and the charge termination condition was set at a time point at which the current value attenuated to 1/50. Discharge was constant current discharge with a current of 0.1 C and a final voltage of 2.0 V This charge-discharge was performed for one cycle. Here, a pausing process of 10 minutes was provided each after charge and after discharge. In this way, the lithium secondary battery was fabricated.

(Discharge Test at 1 C)

A discharge test at 1 C was performed at 25°C. Charge was constant current constant voltage charge with a current of 0.1 C and a voltage of 4.7 V, and the charge termination condition was set at a time point at which the current value attenuated to 1/50. Discharge was constant current discharge with a current of 1 C and a final voltage of 2.0 V

Here, a pausing process of 10 minutes was provided each after charge and after discharge. The discharge capacity and the average voltage (V) at this time, and the energy density calculated as the product of them were recorded as "discharge capacity at 1 C (mAh/g)" and "average voltage (V) at 1 C", and "energy density at 1 C (mWh/g)", respectively.

(Charge-Discharge Cycle Test)

A charge-discharge test of 25 cycles was performed under an environment of 25°C. Charge was constant current charge with a current of 0.33 C and an end-of-charge voltage of 4.7 V Discharge was constant current discharge with a current of 0.33 C and an end-of-discharge voltage of 2.0 V Here, a pause period of 10 minutes was provided each after charge and after discharge. The percentage of the energy density calculated as the product of the discharge capacity at the 25th cycle and the average voltage with respect to the energy density calculated as the product of the discharge capacity at the first cycle and the average voltage in the charge-discharge cycle test was recorded as "energy density retention rate (%)".

Test results of lithium secondary batteries, using each of the lithium transition metal composite oxides according to the examples and comparative examples as a positive active material for a lithium secondary battery, are shown in Table 2.

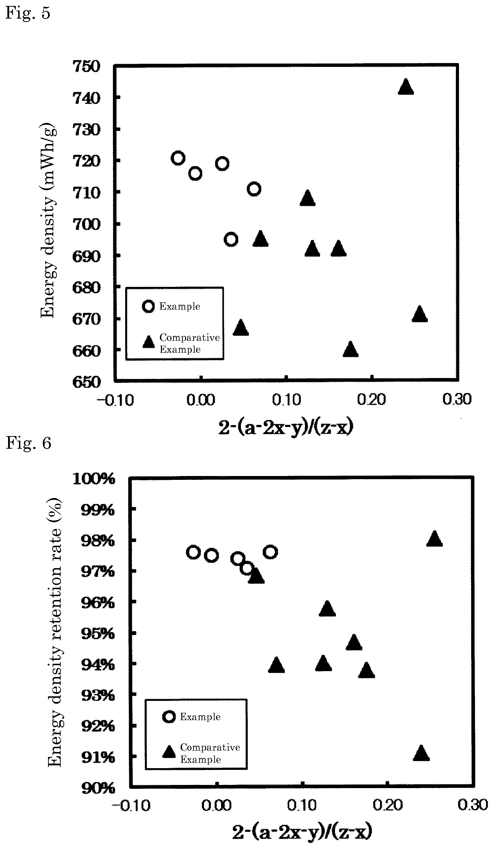

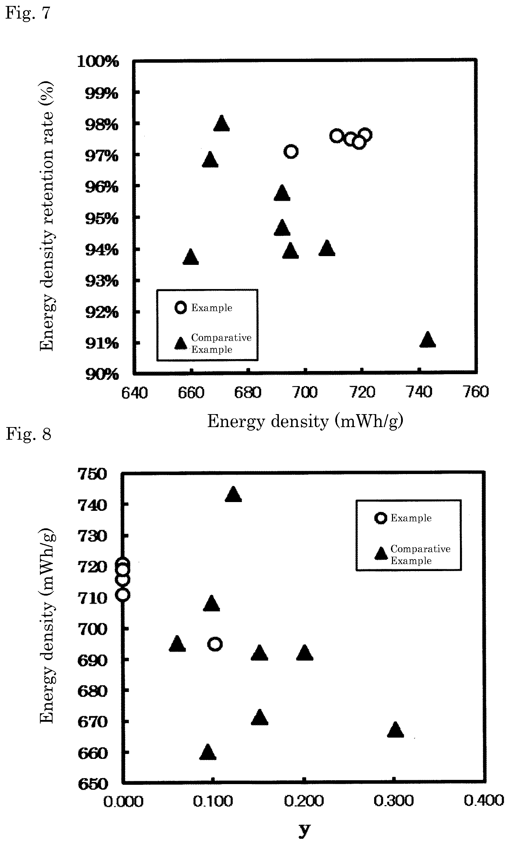

Figs. 5 and 6 show graphs each plotting the energy density and the energy density retention rate with respect to $\omega$ = 2- (a - 2x - y)/(z - x) in the examples and comparative examples, and Fig. 7 shows the relationship between the energy density and the energy density retention rate in the examples and comparative examples.

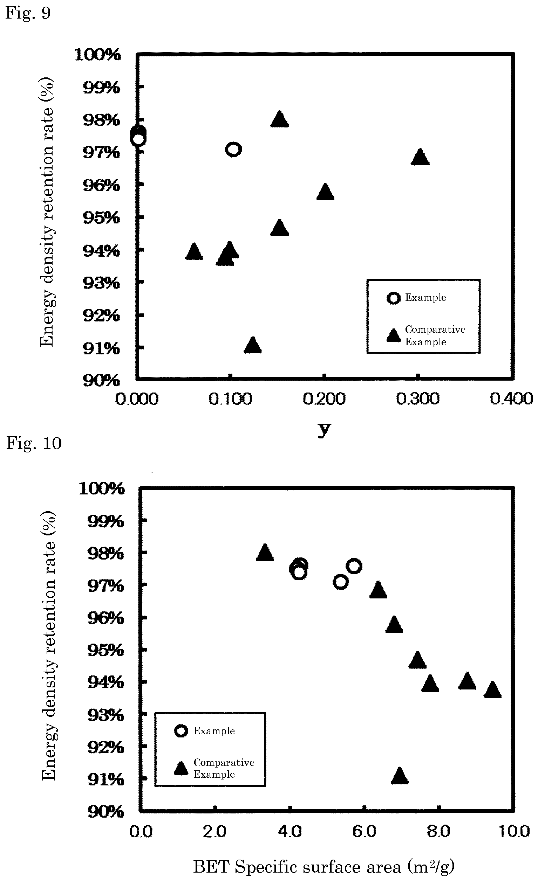

Figs. 8 and 9 show graphs each plotting the energy density and the energy density retention rate with respect to y in the examples and comparative examples.

[Table 2]

| | Li (a) | Ni (x) | Co (y) | Mn (z) | 2-(a-2x-y)/(z-x) | BET Specific surface area (m²/g) | Energy density at 1 C (mWh/g) | Energy density retention rate (%) |
|---|---|---|---|---|---|---|---|---|
| Example 2-1 | 1.33 | 0.338 | 0.000 | 0.662 | -0.03 | 4.3 | 721 | 97.60% |
| Example 2-2 | 1.30 | 0.340 | 0.000 | 0.660 | 0.06 | 5.7 | 711 | 97.60% |
| Example 2-3 | 1.32 | 0.341 | 0.000 | 0.659 | -0.01 | 4.2 | 716 | 97.50% |

(continued)

| | Li (a) | Ni (x) | Co (y) | Mn (z) | $2 - (a - 2x - y)/(z - x)$ | BET Specific surface area $(m^2/g)$ | Energy density at 1 C (mWh/g) | Energy density retention rate (%) |
|---|---|---|---|---|---|---|---|---|
| Example 2-4 | 1.31 | 0.341 | 0.000 | 0.659 | 0.03 | 4.2 | 719 | 97.40% |
| Example 2-5 | 1.13 | 0.383 | 0.102 | 0.515 | 0.04 | 5.4 | 695 | 97.10% |
| Comparative Example 2-1 | 1.30 | 0.193 | 0.302 | 0.505 | 0.05 | 6.4 | 667 | 96.80% |
| Comparative Example 2-2 | 1.11 | 0.347 | 0.152 | 0.501 | 0.26 | 3.4 | 671 | 98.00% |
| Comparative Example 2-3 | 1.36 | 0.193 | 0.201 | 0.605 | 0.13 | 6.8 | 692 | 95.80% |
| Comparative Example 2-4 | 1.21 | 0.296 | 0.152 | 0.552 | 0.16 | 7.4 | 692 | 94.70% |
| Comparative Example 2-5 | 1.36 | 0.244 | 0.099 | 0.657 | 0.13 | 8.8 | 708 | 94.00% |
| Comparative Example 2-6 | 1.33 | 0.290 | 0.061 | 0.649 | 0.07 | 7.8 | 695 | 93.90% |
| Comparative Example 2-7 | 1.28 | 0.283 | 0.095 | 0.622 | 0.18 | 9.5 | 660 | 93.70% |
| Comparative Example 2-8 | 1.39 | 0.182 | 0.124 | 0.694 | 0.24 | 7.0 | 743 | 91.10% |

From Table 2 and Figs. 5 to 9, the following can be seen.

The positive active materials according to Examples 2-1 to 2-5 in which $\omega = 2 - (a - 2x - y)/(z - x)$ satisfies $-0.06 \leq \omega \leq 0.06$ have high energy density retention rate and also have high energy density at 1 C (see Figs. 5 to 7).

In the positive active material according to Comparative Example 2-1, $\omega$ satisfies the above range, and the energy density retention rate is slightly lower than that of the example, but the energy density greatly decreases. This is presumably because the molar ratio y of Co to the transition metal is as large as 0.302.

Further, from Fig. 8 and Fig. 9, it is understood that when the molar ratio y of Co to the transition metal is $y \leq 0.105$, an active material having high energy density retention rate and high energy density at 1 C is obtained.

The positive active material according to Comparative Example 2-2 in which $\omega$ is out of the above upper limit has high energy density retention rate but has low energy density at 1 C, and all of the positive active materials according to Comparative Examples 2-3 to 2-8 in which $\omega$ does not satisfy the above range have low energy density retention rate.

Further, the relationship between the BET specific surface area and the energy density retention rate is shown in Fig. 10.

It is understood that the positive active material having a smaller BET specific surface area is advantageous to the high energy density retention rate.

INDUSTRIAL APPLICABILITY

According to the present invention, it is possible to provide a "lithium excess type" positive active material having high energy density and high energy density retention rate with charge-discharge cycles. Therefore, the secondary battery using this positive active material is useful for hybrid vehicles and electric vehicles.

DESCRIPTION OF REFERENCE SIGNS

1:     Lithium secondary battery
2:     Electrode group
3:     Battery case

4: Positive electrode terminal
4': Positive electrode lead
5: Negative electrode terminal
5': Negative electrode lead
20: Energy storage unit
30: Energy storage apparatus

**Claims**

1. A positive active material for a lithium secondary battery comprising a lithium transition metal composite oxide, wherein the lithium transition metal composite oxide

   has an $\alpha$-NaFeO$_2$ type crystal structure, and
   is represented by formula Li$_w$Ni$_x$Co$_y$Mn$_z$O$_{1+w}$ with w > 1, x + y + z = 1

   $$0.315 < x < 0.35,$$

   $$0 \le y < 0.02,$$

   $$0.655 < z < 0.675,$$

   and

   $$0.475 < (w - 2x - y)/w < 0.510.$$

2. The positive active material for a lithium secondary battery according to claim 1, wherein w in the lithium transition metal oxide is $1.30 \le w \le 1.35$.

3. The positive active material for a lithium secondary battery according to claim 1 or 2, wherein the lithium transition metal oxide has a lattice constant a of 2.870 Å or more.

4. The positive active material for a lithium secondary battery according to any one of claims 1 to 3, wherein the lithium transition metal composite oxide has an aluminum compound on the particle surface.

5. The positive active material for a lithium secondary battery according to any one of claims 1 to 4, comprising a small amount of metal M, with M being one of Mg, Sr, Ba, Cd, Zn, Ga, B, Zr, Ti, Ca, Ce, Y, Nb, Cr, Fe, and V, or a combination of two or more thereof, to such an extent that its characteristics are not markedly impaired.

6. A method for producing a positive active material for a lithium secondary battery comprising a lithium transition metal composite oxide, comprising supplying an aqueous solution of a transition metal compound containing Ni and Mn, or Ni, Co and Mn whose molar ratios x, y, and z of Ni, Co, and Mn are adjusted to be 0.315 < x < 0.35, 0 ≤ y < 0.02, and 0.655 < z < 0.675 with x + y + z = 1, and an alkaline aqueous solution to a reaction tank, producing a precursor containing a transition metal, and mixing the precursor and the lithium compound so that, when the molar ratio of Li in the lithium transition metal composite oxide is w, the value of (w - 2x - y)/w is in the range of 0.475 < (w - 2x - y)/w < 0.510 (w > 1), and firing the mixture to produce a lithium transition metal composite oxide having an $\alpha$-NaFeO$_2$ type crystal structure.

7. A positive electrode for a lithium secondary battery comprising the positive active material as defined in any one of claims 1 to 5.

8. A lithium secondary battery comprising a positive electrode, a negative electrode and a nonaqueous electrolyte, wherein the positive electrode is the positive electrode as defined in claim 7.

9. An energy storage apparatus in which a plurality of the lithium secondary batteries as defined in claim 8 is assembled.

**Patentansprüche**

1. Positives Aktivmaterial für eine Lithiumsekundärbatterie, umfassend ein Lithium-Übergangsmetall-Mischoxid, wobei das Lithium-Übergangsmetall-Mischoxid

   eine Kristallstruktur vom $\alpha$-NaFeO$_2$-Typ aufweist und dargestellt wird durch
   die Formel Li$_w$Ni$_x$Co$_y$Mn$_z$O$_{1+w}$ mit w > 1, x + y + z = 1,

$$0{,}315 < x < 0{,}35,$$

$$0 \leq y < 0{,}02,$$

$$0{,}655 < z < 0{,}675$$

   und

$$0{,}475 < (w - 2x - y)/w < 0{,}510.$$

2. Positives Aktivmaterial für eine Lithiumsekundärbatterie nach Anspruch 1, wobei w in dem Lithium-Übergangsmetall-Mischoxid $1{,}30 \leq w \leq 1{,}35$ ist.

3. Positives Aktivmaterial für eine Lithiumsekundärbatterie nach Anspruch 1 oder 2, wobei das Lithium-Übergangsmetall-Mischoxid eine Gitterkonstante a von 2,870 Å oder mehr aufweist.

4. Positives Aktivmaterial für eine Lithiumsekundärbatterie nach einem der Ansprüche 1 bis 3, wobei das Lithium-Übergangsmetall-Mischoxid eine Aluminiumverbindung auf der Partikeloberfläche aufweist.

5. Positives Aktivmaterial für eine Lithiumsekundärbatterie nach einem der Ansprüche 1 bis 4, umfassend eine kleine Menge an Metall M, wobei M eines von Mg, Sr, Ba, Cd, Zn, Ga, B, Zr, Ti, Ca, Ce, Y, Nb, Cr, Fe und V oder eine Kombination von zweien oder mehr davon ist, in solchem Maße, dass seine Eigenschaften nicht merklich beeinträchtigt werden.

6. Verfahren zur Herstellung eines ein Lithium-Übergangsmetall-Mischoxid umfassenden positiven Aktivmaterials für eine Lithiumsekundärbatterie, umfassend: Zuführen einer wässrigen Lösung einer Ni und Mn oder Ni, Co und Mn enthaltenden Übergangsmetallverbindung, deren Molanteile x, y und z von Ni, Co und Zn so eingestellt werden, dass 0,315 < x < 0,35, $0 \leq y < 0{,}02$ und 0,655 < z < 0,675, mit x + y + z = 1, und einer wässrigen alkalischen Lösung zu einem Reaktionsbehälter, Herstellen einer ein Übergangsmetall enthaltenden Vorstufe, und Mischen der Vorstufe und der Lithiumverbindung, sodass, wenn der Molanteil von Li in dem Lithium-Übergangsmetall-Mischoxid w ist, der Wert von (w - 2x y)/w im Bereich von 0,475 < (w - 2x - y)/w < 0,510 (w > 1) liegt, und Brennen des Gemisches, um ein Lithium-Übergangsmetall-Mischoxid mit einer Kristallstruktur vom $\alpha$-NaFeO$_2$-Typ herzustellen.

7. Positive Elektrode für eine Lithiumsekundärbatterie, umfassend das positive Aktivmaterial wie in einem der Ansprüche 1 bis 5 definiert.

8. Lithiumsekundärbatterie, umfassend eine positive Elektrode, eine negative Elektrode und einen nichtwässrigen Elektrolyten, wobei die positive Elektrode die positive Elektrode, wie in Anspruch 7 definiert, ist.

9. Energiespeichervorrichtung, in der eine Mehrzahl von den Lithiumsekundärbatterien, wie in Anspruch 8 definiert, zusammengefügt wird.

**Revendications**

1. Matière active positive pour batterie secondaire au lithium comprenant un oxyde composite de lithium métal de transition, dans laquelle l'oxyde composite de lithium métal de transition

   a une structure de cristal de type $\alpha$-NaFeO$_2$ et
   est représenté par Li$_w$Ni$_x$Co$_y$Mn$_z$O$_{1+w}$ avec w > 1, x + y + z = 1,

$$0,315 < x < 0,35,$$

$$0 \leq y < 0,02,$$

$$0,655 < z < 0,675,$$

   et

$$0,475 < (w - 2x - y)/w < 0,510.$$

2. Matière active positive pour batterie secondaire au lithium selon la revendication 1, dans laquelle w dans l'oxyde de lithium métal de transition est $1,30 \leq w \leq 1,35$.

3. Matière active positive pour batterie secondaire au lithium selon la revendication 1 ou 2, dans laquelle l'oxyde de lithium métal de transition a une constante de réseau de 2,870 Å ou plus.

4. Matière active positive pour batterie secondaire au lithium selon l'une quelconque des revendications 1 à 3, dans laquelle l'oxyde composite de lithium métal de transition a un composé aluminium sur la surface de la particule.

5. Matière active positive pour batterie secondaire au lithium selon l'une quelconque des revendications 1 à 4, comprenant une faible quantité de métal M, M étant un de Mg, Sr, Ba, Cd, Zn, Ga, B, Zr, Ti, Ca, Ce, Y, Nb, Cr, Fe et V ou une combinaison de deux ou plus de deux de ceux-ci, à un degré tel que ses caractéristiques ne sont pas altérées de manière marquée.

6. Procédé de production d'une matière active positive pour batterie secondaire au lithium comprenant un oxyde composite de lithium métal de transition, comprenant la fourniture d'une solution aqueuse d'un composé métal de transition contenant Ni et Mn ou Ni, Co et Mn dont les rapports molaire x, y et z de Ni, Co et Mn sont ajustés pour être 0,315 < x < 0,35, $0 \leq y < 0,02$ et 0,655 < z < 0,675, avec x + y + z = 1,
   et une solution alcaline à un réservoir de réaction, produisant un précurseur contenant un métal de transition et mélangeant le précurseur et le composé lithium de sorte que, quand le rapport molaire de Li dans l'oxyde composite de lithium métal de transition est w, la valeur de (w - 2x y)/w se situe dans la plage de 0,475 < (w - 2x - y)/w < 0,510 (w > 1)) et la mise à feu du mélange pour produire un oxyde composite de lithium métal de transition ayant une structure de cristal de type $\alpha$-NaFeO$_2$.

7. Electrode positive pour batterie secondaire au lithium comprenant la matière active positive telle que définie dans l'une quelconque des revendications 1 à 5.

8. Batterie secondaire au lithium comprenant une électrode positive, une électrode négative et un électrolyte non aqueux, l'électrode positive étant l'électrode positive telle que définie dans la revendication 7.

9. Appareil de stockage d'énergie dans lequel une pluralité des batteries secondaires au lithium telles que définies dans la revendication 8 est assemblée.

Fig. 1

Fig. 2

Fig. 3

Fig. 4

Fig. 5

Fig. 6

Fig. 7

Fig. 8

Fig. 9

Fig. 10

Fig. 11

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014130782 A
- JP 2014116162 A
- JP 2014089826 A
- JP 2013503450 A

**Non-patent literature cited in the description**

- **GAO MIN et al.** *Electrochimica Acta,* 2013, vol. 95, 87-94